# EUROPEAN PATENT APPLICATION

(11) **EP 4 098 774 A1**
(43) Date of publication of application: **07.12.2022**
(21) Application number: 21748456.7
(22) Date of filing: 21.01.2021
(51) Int. Cl.: C25B 11/03

(54) **METAL POROUS BODY SHEET AND WATER ELECTROLYSIS DEVICE**

(30) Priority: 27.01.2020 WO PCT/JP2020/002739
(71) Applicant: SUMITOMO ELECTRIC INDUSTRIES, LTD., Osaka-shi, Osaka 541-0041 (JP)
(72) Inventor: HIGASHINO, Takahiro, Osaka-shi, Osaka 541-0041 (JP); OKUNO, Kazuki, Osaka-shi, Osaka 541-0041 (JP); TAWARAYAMA, Hiromasa, Osaka-shi, Osaka 541-0041 (JP); MAJIMA, Masatoshi, Osaka-shi, Osaka 541-0041 (JP); OKUMURA, Soichiro, Osaka-shi, Osaka 541-0041 (JP)
(74) Representative: Boult Wade Tennant LLP
(86) International application number: PCT/JP2021/001983
(87) International publication number: WO 2021/153406

(57) **Abstract**

This metal porous body sheet includes a metal porous body having a three-dimensional mesh structure and has a first main surface and a second main surface that is a reverse surface to the first main surface. The first main surface is formed with multiple holes extending from the first main surface toward the second main surface along a first direction.

## Description

### TECHNICAL FIELD

The present disclosure relates to a metal porous body sheet and a water electrolysis device. The present application claims priority based on PCT/JP2020/002739, which is an international patent application filed on January 27, 2020. All the contents described in the international patent application are incorporated herein by reference.

### BACKGROUND ART

Patent Literature 1 (National Patent Publication No. 2005-536639) describes an electrode body. A wire mesh is used for the electrode body described in Patent Literature 1. Patent Literature 2 (Patent Publication No. 61-57397) describes an electrode for water electrolysis. A metal porous body having a three-dimensional mesh structure is used for the electrode for water electrolysis described in Patent Literature 2.

### CITATION LIST

### PATENT LITERATURE

PTL 1: National Patent Publication No. 2005-536639
PTL 2: Patent Publication No. 61-57397

### SUMMARY OF INVENTION

The metal porous body sheet according to the present disclosure includes a metal porous body having a three-dimensional mesh structure and has a first main surface and a second main surface that is a reverse surface to the first main surface. The first main surface is formed with multiple holes extending from the first main surface toward the second main surface along a first direction.

### BRIEF DESCRIPTION OF DRAWINGS

Fig. 1 is a plan view of a metal porous body sheet 10.
Fig. 2 is a cross-sectional view taken along line II-II in Fig. 1.
Fig. 3 is a schematic diagram illustrating an internal structure of metal porous body sheet 10.
Fig. 4 is an enlarged cross-sectional view illustrating the internal structure of metal porous body sheet 10.
Fig. 5 is a cross-sectional view taken along line V-V in Fig. 4.
Fig. 6 is a schematic diagram illustrating a unit cell structure of a metal porous body defined by a skeleton 11.
Fig. 7 is a schematic cross-sectional diagram of a unit cell of a water electrolysis device 100.
Fig. 8 is a schematic diagram for describing an effect of water electrolysis device 100 using metal porous body sheet 10.
Fig. 9 is a schematic diagram of a simple water electrolysis device 110.
Fig. 10 is a graph showing a result of measuring an electrolysis voltage by changing an opening ratio in simple water electrolysis device 110.
Fig. 11 is a plan view of a metal porous body sheet 10A.
Fig. 12 is a plan view of a metal porous body sheet 10B.
Fig. 13 is a plan view of a metal porous body sheet 10C.
Fig. 14 is a plan view of a metal porous body sheet 10D.
Fig. 15 is a plan view of a metal porous body sheet 10E.
Fig. 16 is a plan view of a metal porous body sheet 10F.
Fig. 17 is a plan view of a metal porous body sheet 10G.
Fig. 18 is a cross-sectional view of a metal porous body sheet 10H along a first direction DR1.
Fig. 19 is a cross-sectional view of a metal porous body sheet 101 along first direction DR1.
Fig. 20 is a cross-sectional view of a metal porous body sheet 10J along first direction DR1.
Fig. 21 is a schematic diagram for describing an effect of water electrolysis device 100 using metal porous body sheet 10H.
Fig. 22 is a plan view of a metal porous body sheet 10K.
Fig. 23 is a plan view of a metal porous body sheet 10L.
Fig. 24 is a plan view of a metal porous body sheet 10M.
Fig. 25 is a plan view of a metal porous body sheet 10N.
Fig. 26 is a plan view of a metal porous body sheet 10O.
Fig. 27 is a plan view of a metal porous body sheet 10P.
Fig. 28 is a plan view of a metal porous body sheet 10Q.
Fig. 29 is a plan view of a metal porous body sheet 10R.
Fig. 30 is a plan view of a metal porous body sheet 10S.
Fig. 31 is a plan view of a metal porous body sheet 10T.
Fig. 32 is a cross-sectional view taken along line XXXII-XXXII in Fig. 31.
Fig. 33 is a schematic cross-sectional diagram of a unit cell of a water electrolysis device 100A.
Fig. 34 is a plan view of an electrode 30a.
Fig. 35 is a plan view illustrating a first arrangement of holes 10g in a water electrolysis test.
Fig. 36 is a plan view illustrating a second arrangement of holes 10g in the water electrolysis test.
Fig. 37 is a plan view illustrating a third arrangement of holes 10g in the water electrolysis test.

### DETAILED DESCRIPTION

### [Problem to be Solved by the Present Disclosure]

The wire mesh used in the electrode body described in Patent Literature 1 has a small surface area. Therefore, when the electrode body described in Patent Literature 1 is used for water electrolysis, the electrolysis voltage increases.

On the other hand, the metal porous body used for the electrode for water electrolysis described in Patent Literature 2 has a large surface area. However, in the metal porous body used in the electrode for water electrolysis described in Patent Literature 2, air bubbles generated by water electrolysis are likely to adhere to the inside. The portion to which bubbles adhere does not contribute to the electrolytic reaction. Therefore, even if the surface area is large, the metal porous body used in the electrode for water electrolysis described in Patent Literature 2 cannot reduce the electrolysis voltage when water electrolysis is performed.

The present disclosure has been accomplished in view of the above-described problems of the prior art. More specifically, the present disclosure provides a metal porous body sheet and a water electrolysis device capable of reducing an electrolysis voltage during water electrolysis.

### [Advantageous Effect of the Present Disclosure]

According to the metal porous body sheet and the water electrolysis device of the present disclosure, it is possible to lower the electrolysis voltage during water electrolysis.

### [Description of Embodiments of the Present Disclosure]

First, embodiments will be listed and described.
(1) A metal porous body sheet according to one embodiment includes a metal porous body having a three-dimensional mesh structure and has a first main surface and a second main surface that is a reverse surface to the first main surface. The first main surface is formed with multiple holes extending from the first main surface toward the second main surface along a first direction.
   In the metal porous body sheet of (1), air bubbles generated during water electrolysis are easily discharged from the inside of the metal porous body sheet through the holes. Thus, according to the metal porous body sheet of (1), it is possible to lower the electrolysis voltage during water electrolysis.
(2) In the metal porous body sheet of (1), each of the multiple holes may penetrate the metal porous body sheet along the first direction.
(3) In the metal porous body sheet of (1) or (2), each of the multiple holes may have an inner diameter that decreases from a first main surface side toward a second main surface side.
   In the metal porous body sheet of (3), air bubbles generated during water electrolysis are more easily discharged from the first main surface side than from the second main surface side. Therefore, in a case where a diaphragm of a water electrolysis device is disposed on the second main surface, the metal porous body sheet of (4) can suppress accumulation of air bubbles generated during water electrolysis in the vicinity of the diaphragm.
(4) In the metal porous body sheets of (1) to (3), the first main surface may be divided into multiple regions along a second direction orthogonal to the first direction. Inner diameters of the multiple holes located in a first region that is one of the multiple regions may be smaller than inner diameters of the multiple holes located in a second region that is another one of the multiple regions.
   Air bubbles generated inside the metal porous body during water electrolysis are likely to remain on an upper side in the vertical direction. In the metal porous body sheet of (4), the second region is located vertically above the first region, so that the inner diameters of the holes on the vertically upper side is larger than the inner diameters of the holes on the vertically lower side. As a result, a larger amount of air bubbles generated during water electrolysis are easily released from the inside of the metal porous body sheet. Thus, according to the metal porous body sheet of (4), it is possible to further lower the electrolysis voltage during water electrolysis.
(5) In the metal porous body sheets of (1) to (3), the first main surface may be divided into multiple regions along a second direction orthogonal to the first direction. A value obtained by dividing a number of the multiple holes located in a first region that is one of the multiple regions by the area of the first region may be smaller than a value obtained by dividing a number of the multiple holes located in a second region that is another one of the multiple regions by an area of the second region.
   In the metal porous body sheet of (5), the second region is located vertically above the first region, so that the number density of the holes is larger on the vertically upper side than on the vertically lower side. As a result, a larger amount of air bubbles generated during water electrolysis are easily released from the inside of the metal porous body sheet. Thus, according to the metal porous body sheet of (5), it is possible to further lower the electrolysis voltage during water electrolysis.
(6) A water electrolysis device according to an embodiment includes an electrolysis electrode having the metal porous body sheet of any one of (1) to (5).
   In the water electrolysis device of (6), the metal porous body sheet of any one of (1) to (5) is used for the electrolysis electrode. Thus, according to the water electrolysis device of (6), it is possible to lower the electrolysis voltage during water electrolysis.
(7) A metal porous body sheet according to another embodiment includes a first main surface and a second main surface that is a reverse surface to the first main surface. The first main surface is formed with multiple holes penetrating the metal porous body sheet along a first direction from the first main surface toward the second main surface. The metal porous body sheet has a porosity of greater than or equal to 80%. A value obtained by dividing a total opening area of the multiple holes in the first main surface by an area of the first main surface is greater than or equal to 0.05 and less than or equal to 0.35.
   According to the metal porous body sheet of (7), it is possible to lower the electrolysis voltage during water electrolysis.
(8) The metal porous body sheet of (7) may include a metal porous body having a three-dimensional mesh structure. An average pore diameter of the pores in the metal porous body sheet when viewed in a direction orthogonal to the first main surface may be greater than or equal to 100 µm.
(9) In the metal porous body sheet of (7) or (8), the multiple holes may be arranged along a second direction orthogonal to the first direction so as to form multiple columns. The multiple holes included in each of the multiple columns may be periodically arranged at a first interval in the second direction. Each of the multiple columns may be periodically arranged at a second interval in a third direction orthogonal to the first direction and the second direction.
(10) In the metal porous body sheet of (9), each of the multiple holes may have a first width in the second direction and a second width in the third direction. The first width may be greater than or equal to 0.5 mm. The second width may be larger than the first width and may be greater than or equal to 1.5 mm.
   According to the metal porous body sheet of (10), it is possible to further lower the electrolysis voltage during water electrolysis.
(11) In the metal porous body sheet of (10), the second width may be greater than or equal to twice the first width.
   According to the metal porous body sheet of (11), it is possible to further lower the electrolysis voltage during water electrolysis.
(12) In the metal porous body sheet of (11), the multiple columns may include multiple first columns and multiple second columns. The multiple first columns and the multiple second columns may be alternately arranged in the third direction. The multiple first columns may be located at positions shifted from the multiple second columns by 0.5 times the first interval in the second direction.
(13) In the metal porous body sheet of (12), a value obtained by dividing, by the second interval, a value obtained by subtracting the second width from the second interval may be greater than or equal to 0.5.
   According to the metal porous body sheet of (13), it is possible to further lower the electrolysis voltage during water electrolysis.
(14) An electrode according to still another embodiment includes the metal porous body sheet of (13) and a support that has a plate shape and that is disposed on the first main surface. The support includes multiple rhombic holes penetrating the support along the first direction and a strand that is located around each of the multiple rhombic holes. The multiple rhombic holes are arranged in a staggered pattern in such a manner that two diagonals extend along the second direction and the third direction, respectively. Each of the multiple rhombic holes includes a first vertex and a second vertex adjacent to the first vertex. The strand includes a first intersection adjacent to the first vertex and a second intersection adjacent to the second vertex. The metal porous body sheet is disposed such that the second direction coincides with a vertical direction. The support is disposed such that a portion of the strand at an intermediate position between the first intersection and the second intersection overlaps the multiple holes.

According to the electrode of (14), it is possible to lower the electrolysis voltage during water electrolysis.

### [Detailed Description of Embodiments of the Present Disclosure]

Next, details of the embodiment will be described with reference to the drawings. In the following drawings, the same or corresponding parts are denoted by the same reference numerals, and redundant description will not be repeated.

### (Configuration of Metal Porous Body Sheet according to First Embodiment)

A metal porous body sheet (hereinafter referred to as "metal porous body sheet 10") according to the first embodiment will now be described.

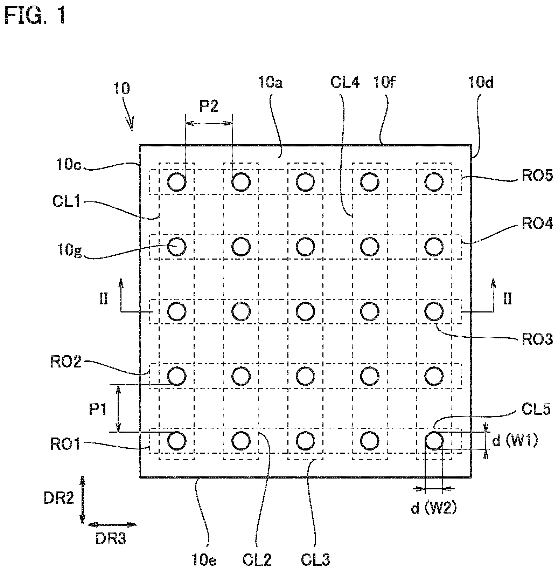

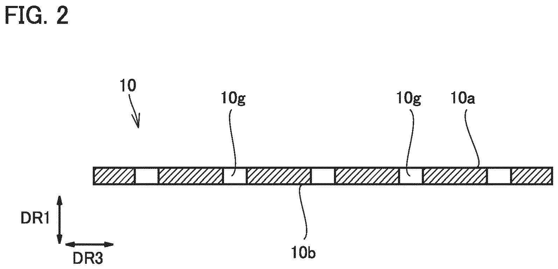

Fig. 1 is a plan view of metal porous body sheet 10. Fig. 2 is a cross-sectional view taken along line II-II in Fig. 1. Fig. 2 shows a cross section of metal porous body sheet 10 along first direction DR1 described later. As illustrated in Figs. 1 and 2, metal porous body sheet 10 has a sheet-like shape. Metal porous body sheet 10 has a first main surface 10a and a second main surface 10b. Second main surface 10b is a reverse surface to first main surface 10a.

A direction from first main surface 10a to second main surface 10b is referred to as first direction DR1. In plan view (that is, as viewed in a direction orthogonal to first main surface 10a), metal porous body sheet 10 has, for example, a rectangular shape. This rectangular shape includes a first side 10c, a second side 10d, a third side 10e, and a fourth side 10f.

First side 10c and second side 10d extend along a second direction DR2. Second direction DR2 is one of directions orthogonal to first direction DR1. Third side 10e and fourth side 10f extend along a third direction DR3. Third direction DR3 is orthogonal to first direction DR1 and second direction DR2.

First main surface 10a is formed with multiple holes 10g. Each of holes 10g penetrates metal porous body sheet 10 along, for example, first direction DR1. Each of holes 10g is, for example, circular in plan view. Each of holes 10g has an inner diameter d. Inner diameter d is constant from first main surface 10a side to second main surface 10b side, for example.

In the following, the width of hole 10g in second direction DR2 is referred to as a width W1, and the width of hole 10g in third direction DR3 is referred to as a width W2. When hole 10g has a circular shape in plan view, inner diameter d is equal to width W1 and width W2.

The area of hole 10g in plan view is defined as an area S1. The area of first main surface 10a in plan view is defined as an area S2. A value obtained by dividing the total value of areas S1 of all holes 10g by area S2 (hereinafter referred to as "opening ratio") is greater than or equal to 0.01, for example. The opening ratio is, for example, less than or equal to 0.40. The opening ratio is preferably greater than or equal to 0.01 and less than or equal to 0.40.

Multiple holes 10g are arranged along second direction DR2 so as to form multiple columns in plan view. In the example of Fig. 1, multiple holes 10g form a first column CL1, a second column CL2, a third column CL3, a fourth column CL4, and a fifth column CL5. First column CL1 to fifth column CL5 are arranged in this order from first side 10c toward second side 10d.

Multiple holes 10g are arranged along third direction DR3 so as to form multiple rows in plan view. In the example of Fig. 1, multiple holes 10g form a first row RO1, a second row RO2, a third row RO3, a fourth row RO4, and a fifth row RO5. First row RO1 to fifth row RO5 are arranged in this order from third side 10e toward fourth side 10f.

Multiple holes 10g are arranged in, for example, a square lattice pattern in plan view. Multiple holes 10g may be arranged in a rectangular lattice pattern in plan view.

The distance between two adjacent holes 10g in second direction DR2 is defined as a pitch P1. The distance between two adjacent holes 10g in third direction DR3 is defined as a pitch P2. Pitch P1 may be equal to or different from pitch P2.

When inner diameter d (width W1, width W2), area S1, and area S2 are measured, firstly, image data of metal porous body sheet 10 is obtained by capturing an image of metal porous body sheet 10 from first direction DR1. Secondly, binarization processing is performed on the captured image data, whereby a region where holes 10g are formed and other regions are identified. The area and dimension of each region are measured on the basis of the result of the identification process, whereby the values of inner diameter d, area S1, and area S2 are obtained.

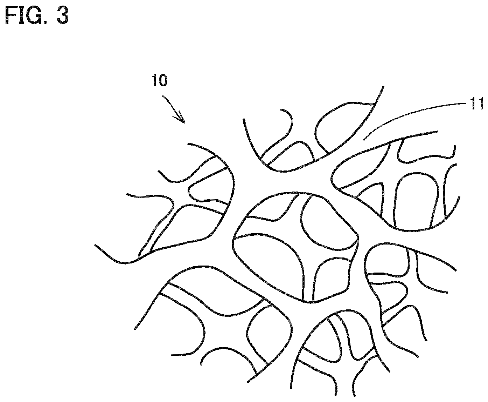

Fig. 3 is a schematic diagram illustrating an internal structure of metal porous body sheet 10. As illustrated in Fig. 3, metal porous body sheet 10 is formed from a metal porous body. The metal porous body has a skeleton 11 having a three-dimensional mesh structure.

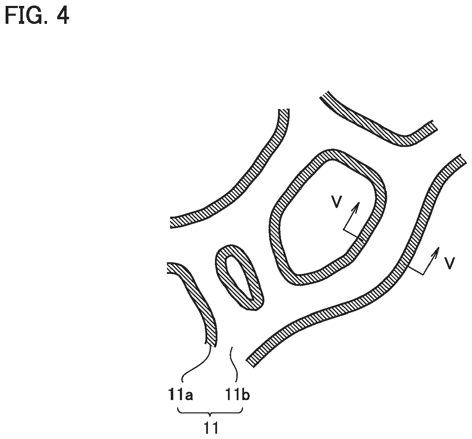

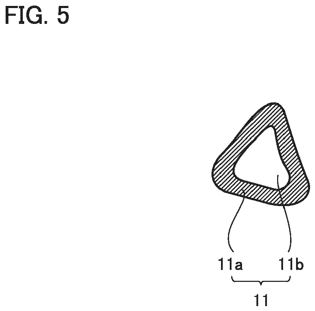

Fig. 4 is an enlarged cross-sectional view illustrating the internal structure of metal porous body sheet 10. Fig. 5 is a cross-sectional view taken along line V-V in Fig. 4. As illustrated in Figs. 4 and 5, skeleton 11 has a hollow cylindrical shape. That is, skeleton 11 has a skeleton body 11a and an internal space 11b defined by skeleton body 11a. Skeleton body 11a is formed of a metal material. The metal material is, for example, nickel (Ni) or a nickel alloy. Skeleton body 11a has a triangular shape in a cross-sectional view intersecting the extending direction. This triangular shape need not be a mathematically exact triangular shape. Skeleton 11 may be solid.

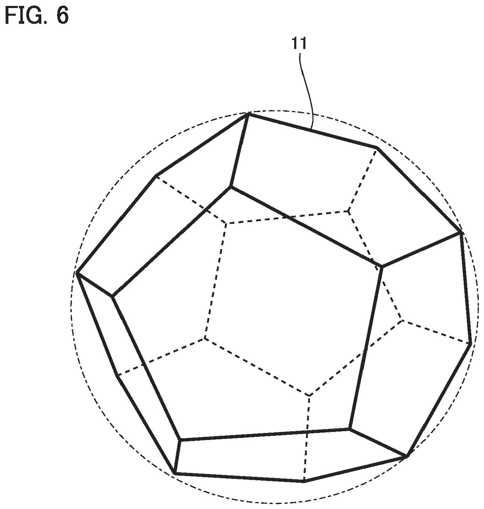

Fig. 6 is a schematic diagram illustrating a unit cell structure of the metal porous body defined by skeleton 11. In the metal porous body, a space between skeletons 11 is a pore as illustrated in Fig. 6. The space defined by skeletons 11 has a regular dodecahedron structure. The diameter of the circumscribed sphere (indicated by a one-dot chain line in Fig. 6) of the regular dodecahedron structure is regarded as the pore diameter of the pore in the metal porous body. An average value of pore diameters of pores in the metal porous body is referred to as an average pore diameter. Inner diameter d is greater than or equal to 1.5 times the average pore diameter of the metal porous body.

### (Configuration of water electrolysis device according to first embodiment)

A configuration of a water electrolysis device (hereinafter referred to as "water electrolysis device 100") according to the first embodiment will now be described.

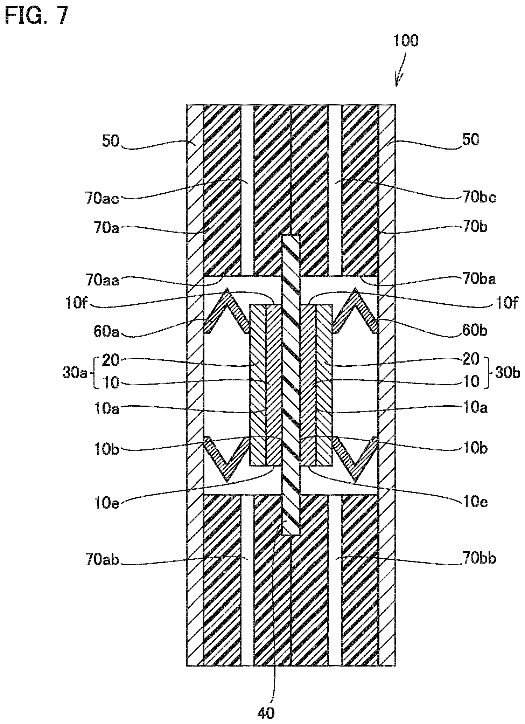

Water electrolysis device 100 is, for example, a device for generating hydrogen gas (H₂) and oxygen gas (O₂). Fig. 7 is a schematic cross-sectional diagram of a unit cell of water electrolysis device 100. As illustrated in Fig. 7, a unit cell of water electrolysis device 100 includes electrodes 30a and 30b, a diaphragm 40, bipolar plates 50, leaf springs 60a and 60b, and frames 70a and 70b. Note that the upper and lower sides in Fig. 7 correspond to the vertically upper side and the vertically lower side, respectively. The unit cell is electrically connected to the adjacent unit cell through bipolar plates 50. Water electrolysis device 100 includes multiple unit cells which are arrayed.

Electrode 30a is, for example, a hydrogen generating electrode. Electrode 30b is, for example, an oxygen generating electrode. Each of electrodes 30a and 30b includes metal porous body sheet 10 and a support 20. In metal porous body sheet 10 constituting electrode 30a (electrode 30b), first side 10c and second side 10d extend along the vertical direction, and third side 10e and fourth side 10f extend along the horizontal direction, for example.

In metal porous body sheet 10 constituting electrode 30a (electrode 30b), first side 10c and second side 10d may extend along the vertical direction, and third side 10e and fourth side 10f may extend along the horizontal direction, for example. Note that metal porous body sheet 10 may not be used for either electrode 30a or electrode 30b.

Support 20 is disposed on metal porous body sheet 10 (more specifically, on first main surface 10a). Support 20 is, for example, expanded metal. Support 20 is formed with an opening. The opening formed in support 20 penetrates support 20 along the thickness direction (along first direction DR1). When viewed in the direction orthogonal to first main surface 10a, holes 10g are exposed from the opening of support 20.

Diaphragm 40 allows hydrogen ions (H⁺) or hydroxide ions (OH⁻) to pass therethrough. As diaphragm 40, a material having low gas permeability and low electron conductivity is used. As diaphragm 40, an ion exchange membrane, a porous diaphragm, or a cloth is used, for example. Diaphragm 40 may be, for example, a membrane formed of a hydrophilic polyethylene nonwoven fabric. Diaphragm 40 is sandwiched between electrode 30a and electrode 30b. Second main surface 10b of metal porous body sheet 10 constituting electrode 30a and second main surface 10b of metal porous body sheet 10 constituting electrode 30b face diaphragm 40.

Frame 70a is formed with an opening 70aa. Opening 70aa penetrates frame 70a along the thickness direction. Frame 70a is further formed with a hole 70ab and a hole 70ac. Hole 70ab extends downward in the vertical direction, and hole 70ac extends upward in the vertical direction. Holes 70ab and 70ac connect opening 70aa and the outside of frame 70a.

Frame 70b is formed with an opening 70ba. Opening 70ba penetrates frame 70b along the thickness direction. Frame 70b is further formed with a hole 70bb and a hole 70bc. Hole 70bb extends downward in the vertical direction, and hole 70bc extends upward in the vertical direction. Holes 70bb and 70bc connect opening 70ba and the outside of frame 70b.

Frame 70a and frame 70b are located such that opening 70aa and opening 70ba overlap each other. Diaphragm 40 is sandwiched between frame 70a and frame 70b so as to be exposed from opening 70aa and opening 70ba.

Frame 70a and frame 70b are sandwiched between two bipolar plates 50. Bipolar plates 50 are made of a material having electron conductivity (having conductivity) for electrical connection with adjacent unit cell. Bipolar plates 50 are made of, for example, nickel (Ni). Although not illustrated, bipolar plates 50 are electrically connected to a power supply at a terminal part of water electrolysis device 100. Bipolar plate 50 is disposed so as to face support 20 included in electrode 30a (electrode 30b).

Electrode 30a is placed in a space defined by diaphragm 40, bipolar plate 50, and opening 70aa. Electrode 30b is placed in a space defined by diaphragm 40, bipolar plate 50, and opening 70ba.

Leaf spring 60a is disposed between bipolar plate 50 and support 20 included in electrode 30a. Leaf spring 60b is disposed between bipolar plate 50 and support 20 included in electrode 30b. As a result, metal porous body sheet 10 included in electrode 30a and metal porous body sheet 10 included in electrode 30b are pressed against diaphragm 40.

An alkaline aqueous solution is supplied from hole 70ab into the space defined by diaphragm 40, bipolar plate 50, and opening 70aa. An alkaline aqueous solution is supplied from hole 70bb into the space defined by diaphragm 40, bipolar plate 50, and opening 70ba. Thus, the space defined by diaphragm 40, bipolar plate 50, and opening 70aa and the space defined by diaphragm 40, bipolar plate 50, and opening 70ba are filled with the alkaline aqueous solution as an electrolytic solution. This alkaline aqueous solution is, for example, an aqueous potassium hydroxide solution (KOH).

During operation of water electrolysis device 100, a voltage is applied between bipolar plates 50 at both ends of the unit cell so that the potential at electrode 30a is lower than the potential at electrode 30b. Thus, in electrode 30a, water in the alkaline aqueous solution is reduced, and hydrogen gas is generated. The hydrogen gas generated at electrode 30a is discharged together with the alkaline aqueous solution from the space defined by diaphragm 40, bipolar plate 50, and opening 70aa through hole 70ac. At this time, hydroxide ions in the alkaline aqueous solution move from the electrode 30a side to the electrode 30b side through diaphragm 40.

The hydroxide ions having moved to the electrode 30b side are oxidized in electrode 30b. As a result, oxygen gas is generated at electrode 30b. The oxygen gas generated at electrode 30b is discharged together with the alkaline aqueous solution from the space defined by diaphragm 40, bipolar plate 50, and opening 70ba through hole 70bc. As such a reaction continues, water electrolysis device 100 generates hydrogen gas and oxygen gas.

Water electrolysis device 100 may be a device for producing chlorine gas (Cl₂), hydrogen gas, and an aqueous sodium hydroxide (NaOH). In this case, a sodium chloride (NaCl) aqueous solution is used as the electrolytic solution.

### (Effects of metal porous body sheet 10 and water electrolysis device 100 according to first embodiment)

The effects of metal porous body sheet 10 and water electrolysis device 100 will be described below.

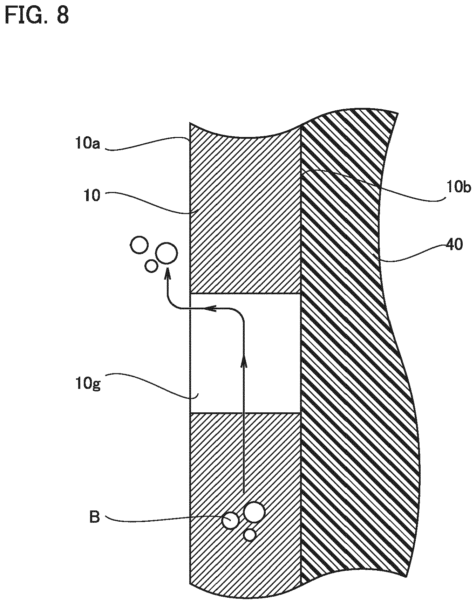

Fig. 8 is a schematic diagram for describing an effect of water electrolysis device 100 using metal porous body sheet 10. As illustrated in Fig. 8, within metal porous body sheet 10 constituting electrode 30a (electrode 30b), hydrogen gas (oxygen gas) is generated due to the electrolysis of the electrolytic solution. The hydrogen gas (oxygen gas) is converted into bubbles B.

Bubbles B move vertically upward by the action of buoyancy and reach holes 10g. Bubbles B reaching holes 10g are discharged to the outside of metal porous body sheet 10 through holes 10g. In metal porous body sheet 10, bubbles B are easily discharged to the outside, whereby generated bubbles B are less likely to interfere with the reaction in electrode 30a (electrode 30b). As described above, according to metal porous body sheet 10 and water electrolysis device 100, it is possible to lower the electrolysis voltage during water electrolysis.

The volume ratio of hydrogen gas in metal porous body sheet 10 constituting electrode 30a under the conditions shown in Table 1 was obtained by simulation. In a case where holes 10g were not formed in metal porous body sheet 10 constituting electrode 30a, the volume ratio of hydrogen gas in metal porous body sheet 10 constituting electrode 30a was 19.7 vol%.

On the other hand, in a case where holes 10g were formed in metal porous body sheet 10 constituting electrode 30a, the volume ratio of hydrogen gas in metal porous body sheet 10 constituting electrode 30a was 17.6 vol%. This also reveals that the formation of holes 10g in metal porous body sheet 10 decreases the electrolysis voltage during water electrolysis.

### [Table 1]

**Table 1**

| | | |
|---|---|---|
| Thickness of metal porous body sheet | 0.5 mm | |
| Average pore diameter of metal porous body sheet | 0.45 mm | |
| Number of holes in metal porous body sheet | No holes | 25 |
| Inner diameter of hole | | 1 mm |
| Planar dimension of metal porous body sheet | 20 mm × 20 mm | |
| Thickness of diaphragm | 1 mm | |
| Planar dimension of diaphragm | 20 mm × 20 mm | |
| Volume ratio of gas in metal porous body sheet | 19.7 vol% | 17.6 vol% |

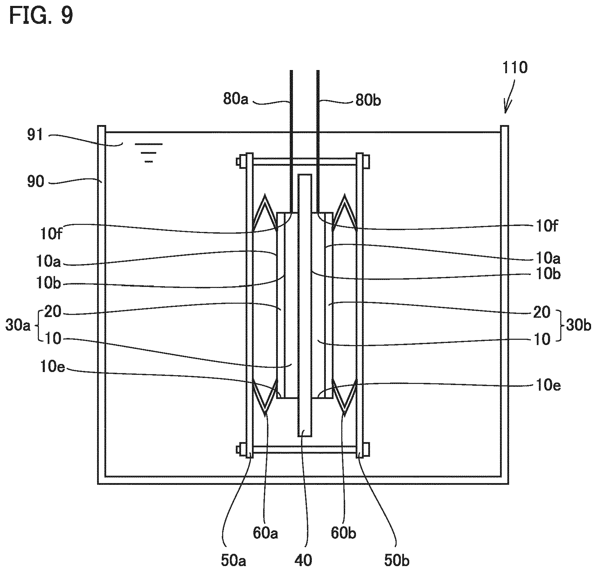

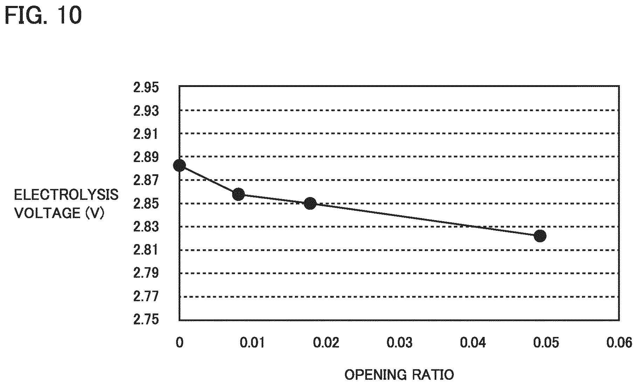

The electrolysis test was conducted using simple water electrolysis device 110. Fig. 9 is a schematic diagram of simple water electrolysis device 110. As illustrated in Fig. 9, simple water electrolysis device 110 includes electrodes 30a and 30b, diaphragm 40, plate members 50a and 50b, leaf springs 60a and 60b, connection lines 80a and 80b, and a container 90. Note that the upper and lower sides in Fig. 10 correspond to the vertically upper side and the vertically lower side, respectively. A potassium hydroxide solution as an electrolytic solution 91 is stored in container 90. Electrodes 30a and 30b, diaphragm 40, plate members 50a and 50b, and leaf springs 60a and 60b are immersed in electrolytic solution 91.

Plate member 50a is disposed so as to face support 20 included in electrode 30a. Plate member 50b is disposed so as to face support 20 constituting electrode 30b. Plate members 50a and 50b are formed of, for example, a resin material.

Leaf spring 60a is disposed between plate member 50a and support 20 included in electrode 30a. Leaf spring 60b is disposed between plate member 50b and support 20 included in electrode 30b. Plate members 50a and 50b are fixed to each other by, for example, screwing. As a result, metal porous body sheet 10 included in electrode 30a and metal porous body sheet 10 included in electrode 30b are pressed against diaphragm 40.

Connection line 80a has one end electrically connected to metal porous body sheet 10 included in electrode 30a. Connection line 80b has one end electrically connected to metal porous body sheet 10 included in electrode 30b. The other end of connection line 80a and the other end of connection line 80b are electrically connected to a power supply (not illustrated). Connection lines 80a and 80b are formed of, for example, platinum (Pt).

Fig. 10 is a graph showing a result of measuring an electrolysis voltage by changing an opening ratio in simple water electrolysis device 110. In the graph of Fig. 10, the horizontal axis represents the opening ratio, and the vertical axis represents the electrolysis voltage (unit: V). The measurement in Fig. 10 was performed under the conditions shown in Table 2. As illustrated in Fig. 10, the electrolysis voltage decreases as the opening ratio increases. From this result, it can be said that it is preferable to increase the opening ratio (for example, greater than or equal to 0.01) in order to lower the electrolysis voltage.

### [Table 2]

**Table 2**

| | | |
|---|---|---|
| Metal porous body sheet | Thickness | 0.5 mm |
| | Average pore diameter | 0.45 mm |
| | Inner diameter of hole | 1 mm |
| | Planar dimension | 200 mm × 200 mm |
| | Number of holes | Change according to opening ratio |
| Material of diaphragm | | Hydrophilized polyethylene nonwoven fabric |
| Electrolytic solution | | 7 mol/L KOH aqueous solution |
| Measurement temperature | | 80°C |
| Method for measuring electrolysis voltage | | Measured after retention at current density of 0.5 A/cm² for 10 minutes |

On the other hand, the metal porous body does not present at the portion where hole 10g is formed. Thus, the surface area of metal porous body sheet 10 decreases as the opening ratio increases. For example, when metal porous body sheet 10 having an average pore diameter of 0.8 mm has an opening ratio of less than or equal to 0.40, this metal porous body sheet 10 has a surface area larger than that of common expanded metal. Therefore, when the opening ratio is greater than or equal to 0.01 and less than or equal to 0.40, it is possible to lower the electrolysis voltage during water electrolysis while maintaining the reactivity of metal porous body sheet 10.

### (First Modification)

Metal porous body sheet 10 according to a first modification (hereinafter referred to as "metal porous body sheet 10A") will be described below. Here, differences from metal porous body sheet 10 will be mainly described, and redundant description will not be repeated.

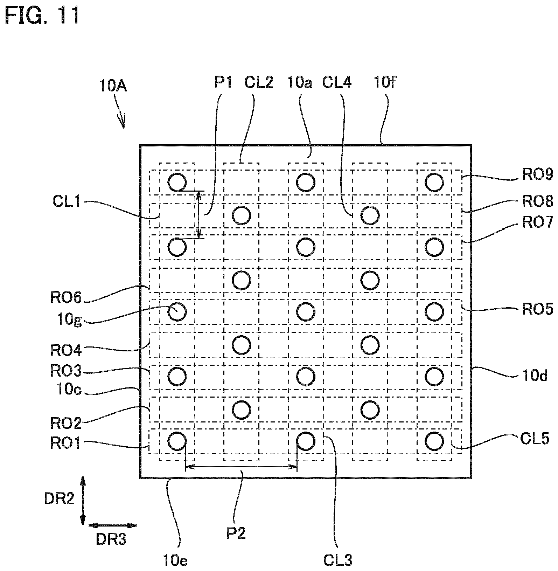

Fig. 11 is a plan view of metal porous body sheet 10A. As illustrated in Fig. 11, in metal porous body sheet 10A, in metal porous body sheet 10A, multiple holes 10g are arranged in a staggered pattern in plan view.

In the example of Fig. 11, in metal porous body sheet 10A, holes 10g belonging to first column CL1, third column CL3, and fifth column CL5 are arranged in a square lattice pattern or a rectangular lattice pattern, and holes 10g belonging to second column CL2 and fourth column CL4 are arranged in a square lattice pattern or a rectangular lattice pattern.

Each of holes 10g belonging to second column CL2 is located between two adjacent holes 10g belonging to first column CL1 and is located between two adjacent holes 10g belonging to third column CL3 in second direction DR2. In metal porous body sheet 10A, each of holes 10g belonging to fourth column CL4 is located between two adjacent holes 10g belonging to third column CL3 and is located between two adjacent holes 10g belonging to fifth column CL5 in second direction DR2.

In metal porous body sheet 10A, multiple holes 10g are arranged along third direction DR3 so as to form multiple rows. In the example of Fig. 11, multiple holes 10g are arranged to form first row RO1, second row RO2, third row RO3, fourth row RO4, fifth row RO5, a sixth row RO6, a seventh row RO7, an eighth row RO8, and a ninth row RO9.

### (Second Modification and Third Modification)

Metal porous body sheet 10 according to a second modification (hereinafter referred to as "metal porous body sheet 10B") and metal porous body sheet 10 according to a third modification (hereinafter referred to as "metal porous body sheet 10C") will be described below. Here, differences from metal porous body sheet 10A will be mainly described, and redundant description will not be repeated.

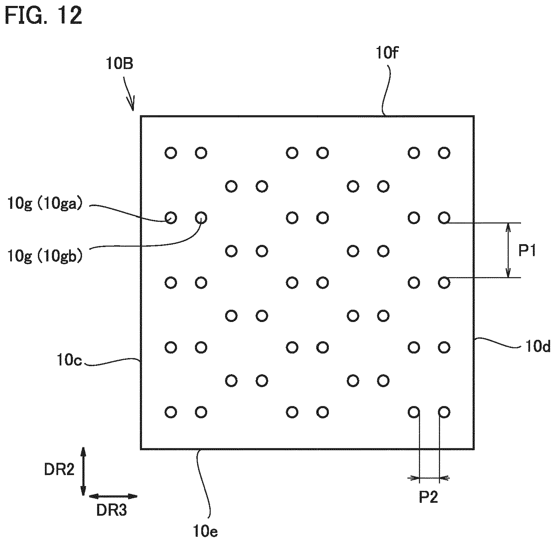

Fig. 12 is a plan view of metal porous body sheet 10B. As illustrated in Fig. 12, in metal porous body sheet 10B, each of holes 10g in metal porous body sheet 10A is replaced with two holes 10g (hole 10ga and hole 10gb). Therefore, the number density of holes 10g in metal porous body sheet 10B (the value obtained by dividing the number of holes 10g by area S2) is larger than the number density of holes 10g in metal porous body sheet 10A. Therefore, in metal porous body sheet 10B, bubbles B are more easily discharged to the outside as compared with metal porous body sheet 10A.

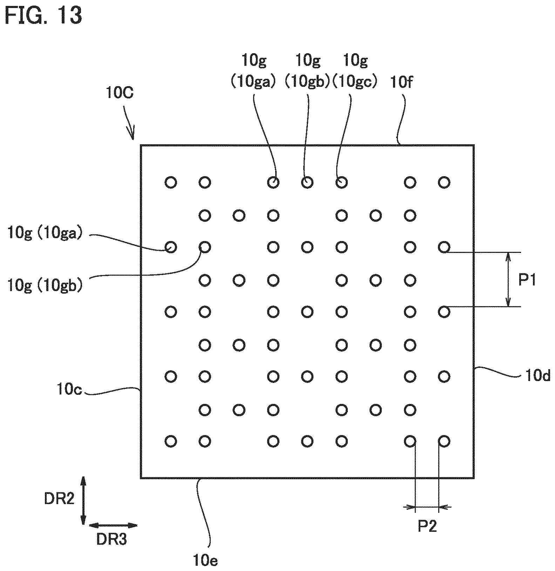

Fig. 13 is a plan view of metal porous body sheet 10C. In metal porous body sheet 10C, each of holes 10g belonging to first column CL1 and fifth column CL5 in metal porous body sheet 10A is replaced with two holes (hole 10ga and hole 10gb), and each of holes 10g belonging to second column CL2 to fourth column CL4 is replaced with three holes 10g (hole 10ga, hole 10gb, and a hole 10gc). Therefore, the number density of holes 10g in metal porous body sheet 10C is larger than the number density of holes 10g in metal porous body sheet 10A and the number density of holes 10g of metal porous body sheet 10B. Thus, in metal porous body sheet 10C, bubbles B are more easily discharged to the outside as compared with metal porous body sheet 10A.

### (Fourth Modification and Fifth Modification)

Metal porous body sheet 10 according to a fourth modification (hereinafter referred to as "metal porous body sheet 10D") and metal porous body sheet 10 according to a fifth modification (hereinafter referred to as "metal porous body sheet 10E") will be described below. Here, differences from metal porous body sheet 10A will be mainly described, and redundant description will not be repeated.

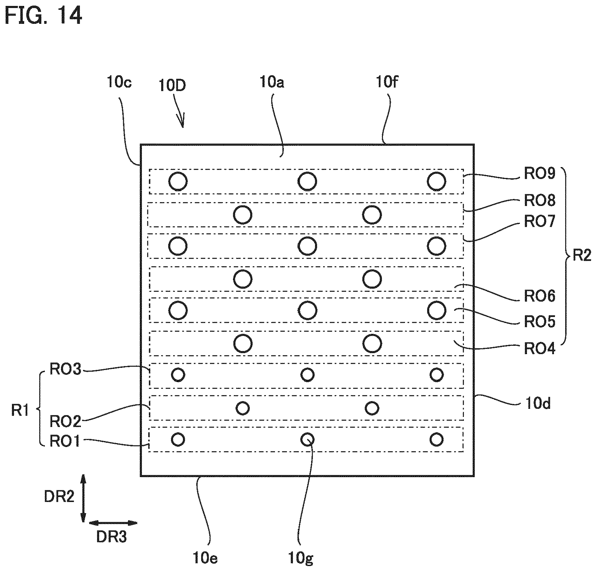

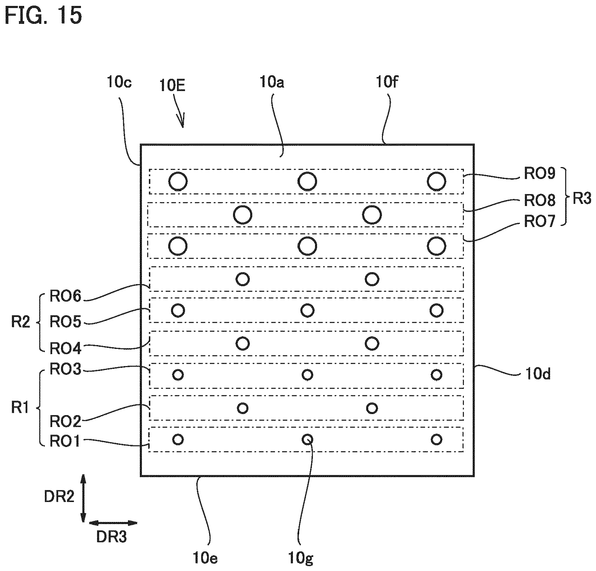

Fig. 14 is a plan view of metal porous body sheet 10D. Fig. 15 is a plan view of metal porous body sheet 10E. As illustrated in Figs. 14 and 15, in metal porous body sheet 10D and metal porous body sheet 10E, first main surface 10a is divided into multiple regions along second direction DR2. Each of the multiple regions has a band-like shape extending along third direction DR3.

In metal porous body sheet 10D, first main surface 10a is divided into a first region R1 and a second region R2. The width of first region R1 in second direction DR2 is equal to 1/3 of the distance between third side 10e and fourth side 10f. The width of second region R2 in second direction DR2 is equal to 2/3 of the distance between third side 10e and fourth side 10f

First region R1 includes holes 10g belonging to first row RO1 to third row RO3. Second region R2 includes holes 10g belonging to fourth row RO4 to ninth row RO9. Second region R2 is located closer to fourth side 10f than first region R1. Inner diameter d in second region R2 is larger than inner diameter d in first region R1.

In metal porous body sheet 10E, first main surface 10a is divided into first region R1, second region R2, and a third region R3. First region R1 includes holes 10g belonging to first row RO1 to third row RO3. Second region R2 includes holes 10g belonging to fourth row RO4 to sixth row RO6. Third region R3 includes holes 10g belonging to seventh row RO7 to ninth row RO9.

First region R1, second region R2, and third region R3 are arranged in this order from third side 10e toward fourth side 10f. Inner diameter d in third region R3 is larger than inner diameter d in second region R2, and inner diameter d in second region R2 is larger than inner diameter d in first region R1.

In water electrolysis device 100 using metal porous body sheet 10D, metal porous body sheet 10D is preferably disposed such that second region R2 is positioned vertically above first region R1. The same applies to water electrolysis device 100 using metal porous body sheet 10E.

Bubbles B generated inside metal porous body sheet 10D easily accumulate on the vertically upper side. However, when metal porous body sheet 10D is disposed such that second region R2 is vertically above first region R1, bubbles B are easily discharged from the inside of metal porous body sheet 10D on the vertically upper side, because inner diameter d in second region R2 is larger than inner diameter d in first region R1. Thus, according to water electrolysis device 100 using metal porous body sheet 10D, it is possible to further lower the electrolysis voltage during water electrolysis. The same applies to water electrolysis device 100 using metal porous body sheet 10E.

### (Sixth Modification and Seventh Modification)

Metal porous body sheet 10 according to a sixth modification (hereinafter referred to as "metal porous body sheet 10F") and metal porous body sheet 10 according to a seventh modification (hereinafter referred to as "metal porous body sheet 10G") will be described below. Here, differences from metal porous body sheet 10A will be mainly described, and redundant description will not be repeated.

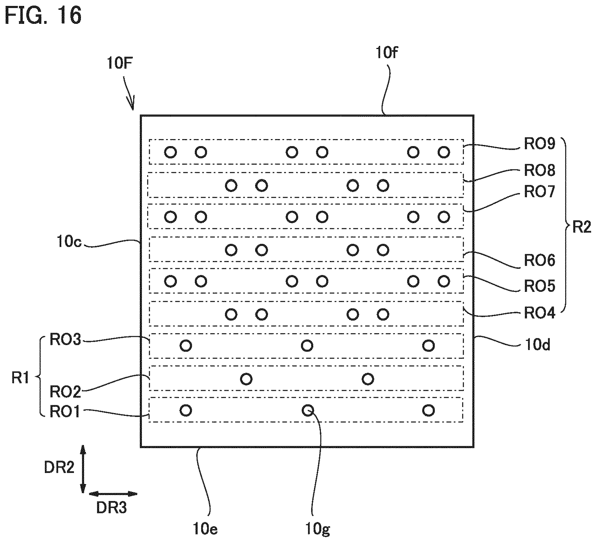

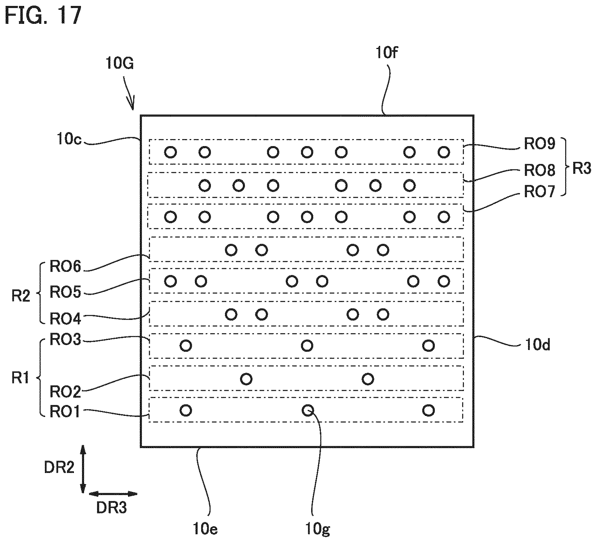

Fig. 16 is a plan view of metal porous body sheet 10F. Fig. 17 is a plan view of metal porous body sheet 10G. As illustrated in Figs. 16 and 17, in metal porous body sheet 10F and metal porous body sheet 10G, first main surface 10a is divided into multiple regions along second direction DR2. Each of the multiple regions has a band-like shape extending along third direction DR3.

In metal porous body sheet 10F, first main surface 10a is divided into first region R1 and second region R2.

The arrangement of holes 10g belonging to first row RO1 to third row RO3 in metal porous body sheet 10F is the same as the arrangement of holes 10g belonging to first row RO1 to third row RO3 in metal porous body sheet 10A. The arrangement of holes 10g belonging to fourth row RO4 to ninth row RO9 in metal porous body sheet 10F is the same as the arrangement of holes 10g belonging to fourth row RO4 to ninth row RO9 in metal porous body sheet 10B. Therefore, the number density of holes 10g in second region R2 is larger than the number density of holes 10g in first region R1.

In metal porous body sheet 10G, first main surface 10a is divided into first region R1, second region R2, and third region R3.

The arrangement of holes 10g belonging to first row RO1 to third row RO3 in metal porous body sheet 10G is the same as the arrangement of holes 10g belonging to first row RO1 to third row RO3 in metal porous body sheet 10A. The arrangement of holes 10g belonging to fourth row RO4 to sixth row RO6 in metal porous body sheet 10G is the same as the arrangement of holes 10g belonging to fourth row RO4 to sixth row RO6 in metal porous body sheet 10B. The arrangement of holes 10g belonging to seventh row RO7 to ninth row RO9 in metal porous body sheet 10G is the same as the arrangement of holes 10g belonging to seventh row RO7 to ninth row RO9 in metal porous body sheet 10C.

Therefore, the number density of holes 10g in third region R3 is larger than the number density of holes 10g in second region R2, and the number density of holes 10g in second region R2 is larger than the number density of holes 10g in first region R1.

Bubbles B generated inside metal porous body sheet 10F easily accumulate on the vertically upper side. However, when metal porous body sheet 10F is disposed such that second region R2 is located vertically above first region R1, bubbles B are easily discharged from the inside of metal porous body sheet 10F on the vertically upper side, because the number density of holes 10g in second region R2 is larger than the number density of holes 10g in first region R1. Thus, according to water electrolysis device 100 using metal porous body sheet 10F, it is possible to further lower the electrolysis voltage during water electrolysis. The same applies to water electrolysis device 100 using metal porous body sheet 10G.

### (Eighth to Tenth Modifications)

Metal porous body sheet 10 according to an eighth modification, metal porous body sheet 10 according to a ninth modification, and metal porous body sheet 10 according to a tenth modification (hereinafter referred to as "metal porous body sheet 10H", "metal porous body sheet 10I", and "metal porous body sheet 10J", respectively) will be described below. Here, differences from metal porous body sheet 10A will be mainly described, and redundant description will not be repeated.

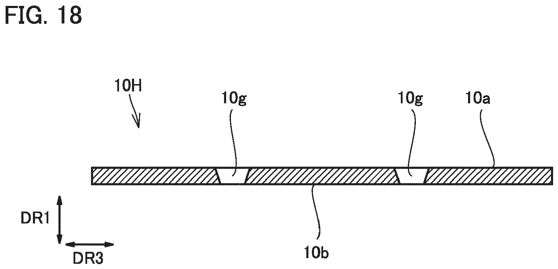

Fig. 18 is a cross-sectional view of metal porous body sheet 10H along first direction DR1. As illustrated in Fig. 18, in metal porous body sheet 10H, inner diameter d decreases from the first main surface 10a side toward the second main surface 10b side (increases from the second main surface 10b side toward the first main surface 10a side). From another point of view, in metal porous body sheet 10H, hole 10g has a tapered shape. In metal porous body sheet 10F, the inner wall surface of hole 10g is constituted by a straight line in the cross-sectional view along first direction DR1.

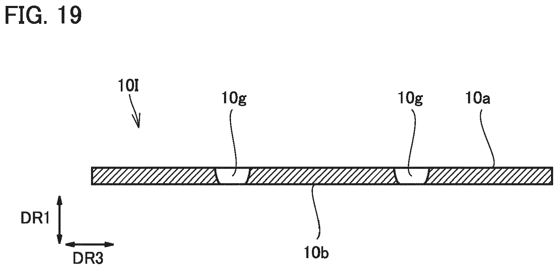

Fig. 19 is a cross-sectional view of metal porous body sheet 101 along first direction DR1. As illustrated in Fig. 19, in metal porous body sheet 101, inner diameter d also decreases from the first main surface 10a side toward the second main surface 10b side. It is to be noted, however, that in metal porous body sheet 101, the inner wall surface of hole 10g is constituted by a curved line in the cross-sectional view along first direction DR1.

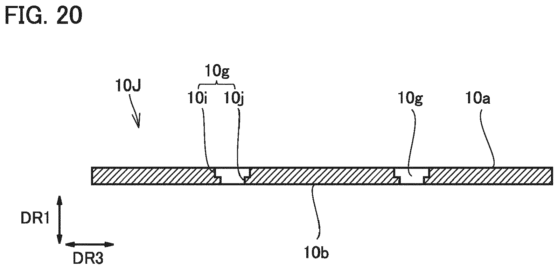

Fig. 20 is a cross-sectional view of metal porous body sheet 10J along first direction DR1. As illustrated in Fig. 20, in metal porous body sheet 10J, inner diameter d also decreases from the first main surface 10a side toward the second main surface 10b side. It is to be noted, however, that in metal porous body sheet 10J, hole 10g includes a first portion 10i and a second portion 10j located closer to second main surface 10b than first portion 10i. Inner diameter d in first portion 10i is larger than inner diameter d in second portion 10j.

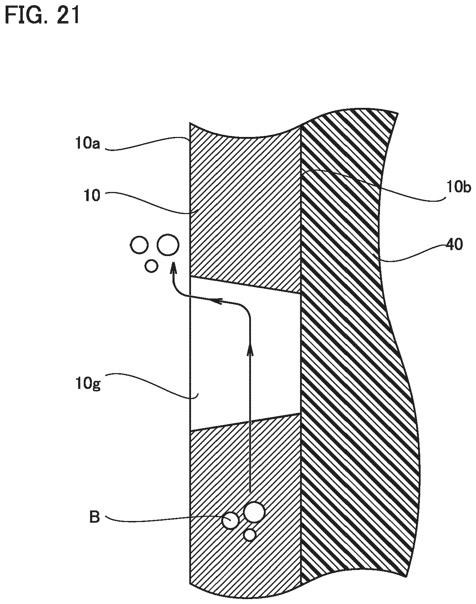

Fig. 21 is a schematic diagram for describing an effect of water electrolysis device 100 using metal porous body sheet 10H. In metal porous body sheet 10H, inner diameter d increases from the second main surface 10b side toward the first main surface 10a side, so that the inner wall of hole 10g includes a portion inclined vertically upward with nearness to first main surface 10a.

As a result, bubbles B reaching holes 10g are easily discharged from the first main surface 10a side to the outside of metal porous body sheet 10H along the inclination. Therefore, water electrolysis device 100 using metal porous body sheet 10H can suppress accumulation of bubbles B in the vicinity of diaphragm 40 by placing metal porous body sheet 10I in such a manner that second main surface 10b faces diaphragm 40. The same applies to water electrolysis device 100 using metal porous body sheet 101 or metal porous body sheet 10J.

### (Eleventh to Fourteenth Modifications)

Metal porous body sheet 10 according to an eleventh modification, metal porous body sheet 10 according to a twelfth modification, metal porous body sheet 10 according to a thirteenth modification, and metal porous body sheet 10 according to a fourteenth modification (hereinafter referred to as "metal porous body sheet 10K", "metal porous body sheet 10L", "metal porous body sheet 10M", and "metal porous body sheet 10N", respectively) will be described below. Here, differences from metal porous body sheet 10A will be mainly described, and redundant description will not be repeated.

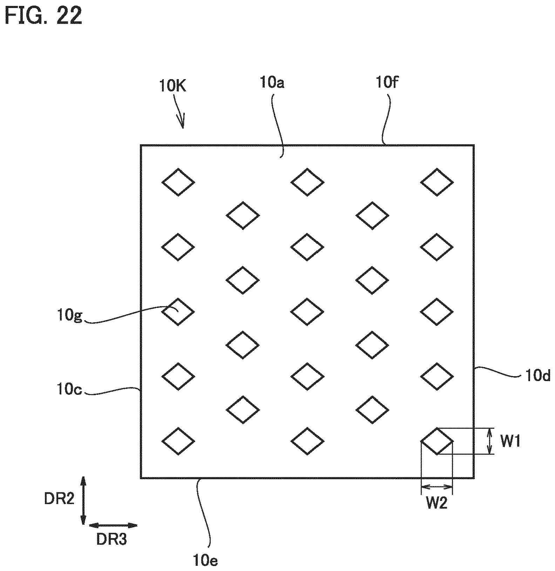

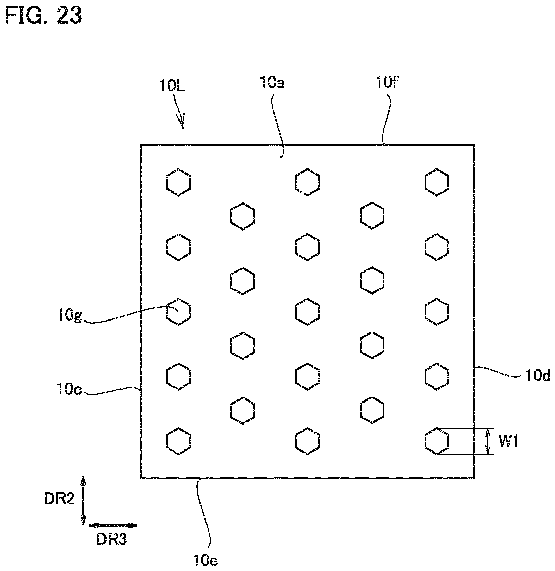

Fig. 22 is a plan view of metal porous body sheet 10K. As illustrated in Fig. 22, in metal porous body sheet 10K, hole 10g has a rhombic shape in plan view. In this rhombic shape, diagonals extend along second direction DR2 and third direction DR3, respectively. In hole 10g of metal porous body sheet 10K, width W2 is larger than width W1, for example. Fig. 23 is a plan view of metal porous body sheet 10L. As illustrated in Fig. 23, in metal porous body sheet 10L, hole 10g has a regular hexagonal shape in plan view. In this regular hexagonal shape, a diagonal line passing through the center of the regular hexagonal shape is along second direction DR2.

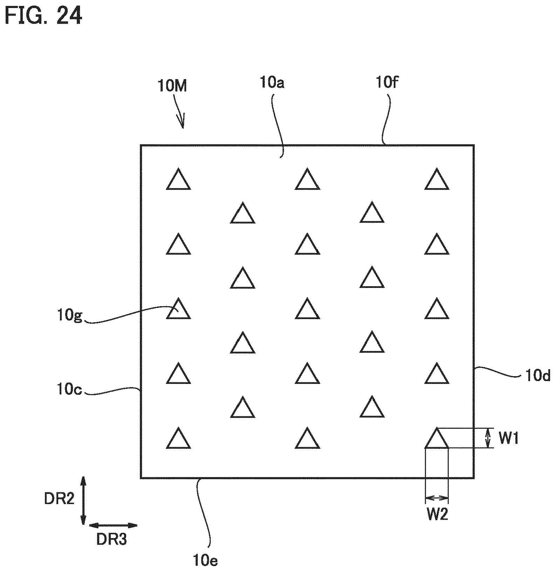

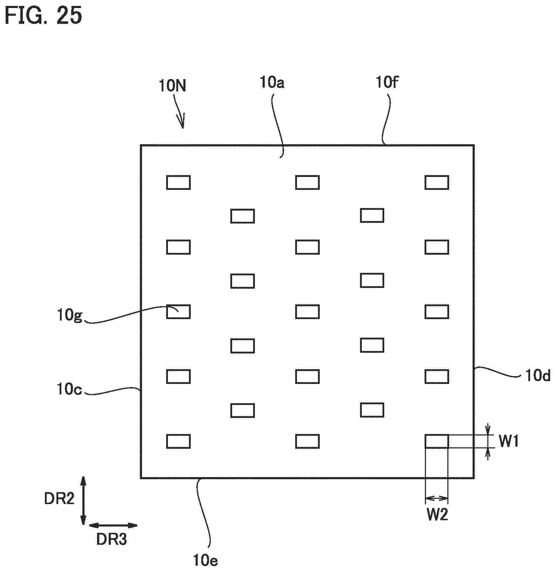

Fig. 24 is a plan view of metal porous body sheet 10M. As illustrated in Fig. 24, in metal porous body sheet 10M, hole 10g has a triangular shape in plan view. This triangular shape is, for example, an isosceles triangle whose vertical angle is directed to fourth side 10f. This triangular shape is, for example, an isosceles triangle whose vertical angle is directed to third side 10e. Fig. 25 is a plan view of metal porous body sheet 10N. As illustrated in Fig. 25, in metal porous body sheet 10N, hole 10g has a quadrangular shape in plan view. The quadrangular shape is a rectangular shape.

### (Fifteenth Modification)

Metal porous body sheet 10 according to a fifteenth modification (hereinafter referred to as "metal porous body sheet 10O") will be described below. Here, differences from metal porous body sheet 10A will be mainly described, and redundant description will not be repeated.

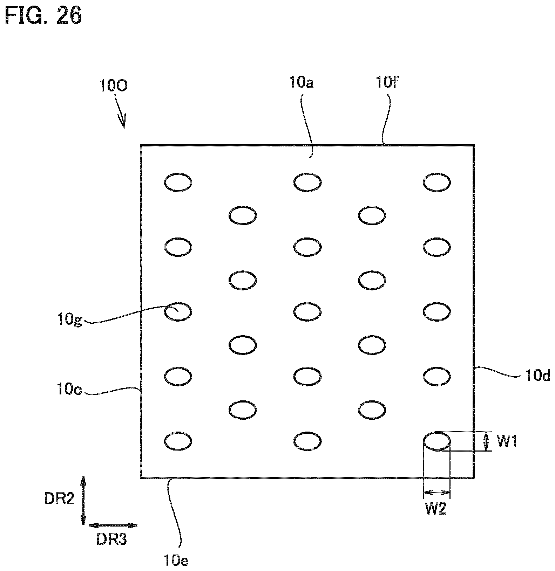

Fig. 26 is a plan view of metal porous body sheet 10O. As illustrated in Fig. 26, in metal porous body sheet 10O, hole 10g has an elliptical shape in plan view. In this elliptical shape, the minor axis and the major axis extend along second direction DR2 and third direction DR3, respectively.

### (Sixteenth Modification)

Metal porous body sheet 10 according to a sixteenth modification (hereinafter referred to as "metal porous body sheet 10P") will be described below. Here, differences from metal porous body sheet 10A will be mainly described, and redundant description will not be repeated.

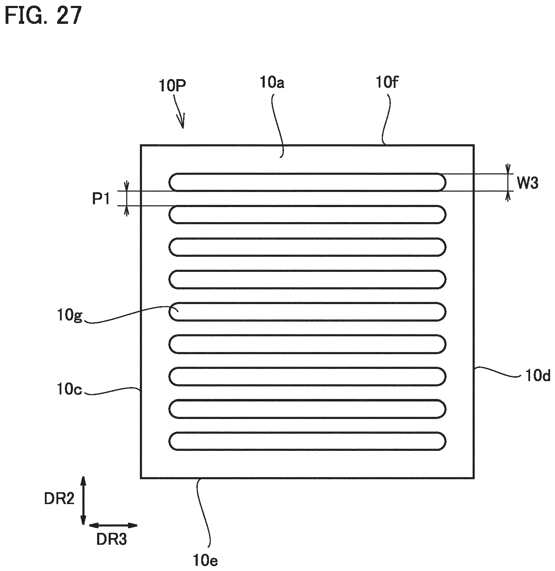

Fig. 27 is a plan view of metal porous body sheet 10P. As illustrated in Fig. 27, in metal porous body sheet 10P, hole 10g has a slit shape. Holes 10g extend linearly along third direction DR3. Multiple holes 10g are spaced along second direction DR2. Hole 10g having a slit shape has a width W3. Width W3 refers to a width in a direction orthogonal to the direction in which hole 10g extends.

### (Seventeenth Modification)

Metal porous body sheet 10 according to a seventeenth modification (hereinafter referred to as "metal porous body sheet 10Q") will be described below. Here, differences from metal porous body sheet 10A will be mainly described, and redundant description will not be repeated.

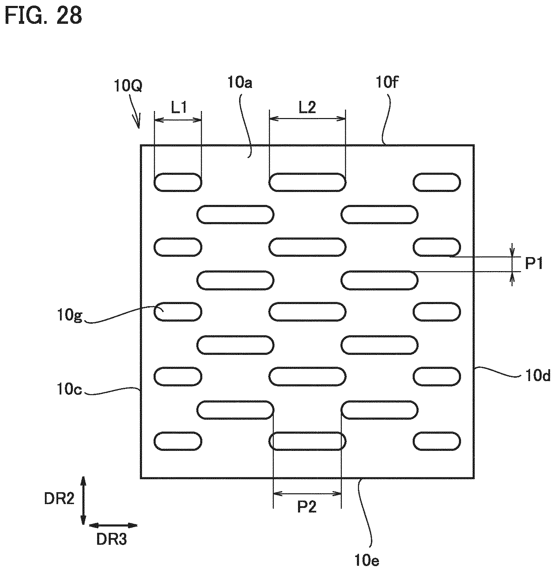

Fig. 28 is a plan view of metal porous body sheet 10Q. As illustrated in Fig. 28, in metal porous body sheet 10Q, hole 10g has a slit shape. Holes 10g extend linearly along third direction DR3. The length of each of holes 10g belonging to first column CL1, third column CL3, and fifth column CL5 in third direction DR3 is defined as a length L1. The length of each of holes 10g belonging to second column CL2 and fourth column CL4 in third direction DR3 is defined as a length L2. Length L2 is preferably larger than length L1.

### (Eighteenth Modification)

Metal porous body sheet 10 according to an eighteenth modification (hereinafter referred to as "metal porous body sheet 10R") will be described below. Here, differences from metal porous body sheet 10A will be mainly described, and redundant description will not be repeated.

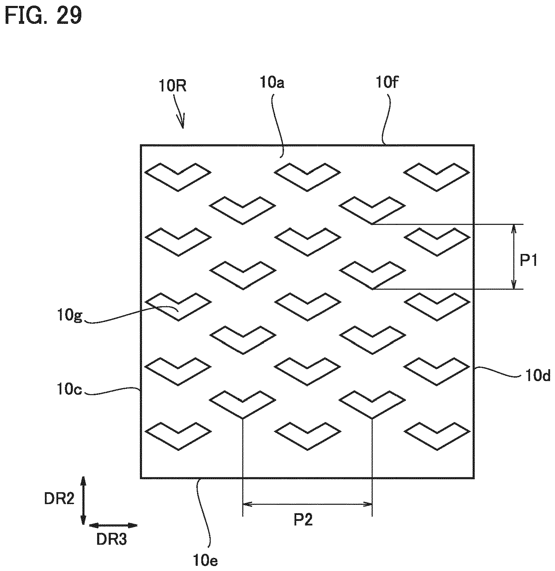

Fig. 29 is a plan view of metal porous body sheet 10R. As illustrated in Fig. 29, in metal porous body sheet 10R, hole 10g has a slit shape. In metal porous body sheet 10R, hole 10g has a V shape. More specifically, hole 10g includes a first portion extending linearly along a direction that forms an acute angle with the direction from first side 10c toward second side 10d, and a second portion connected to the first portion and extending linearly along a direction that forms an obtuse angle with the direction from first side 10c toward second side 10d.

### (Nineteenth Modification)

Metal porous body sheet 10 according to a nineteenth modification (hereinafter referred to as "metal porous body sheet 10S") will be described below. Here, differences from metal porous body sheet 10A will be mainly described, and redundant description will not be repeated.

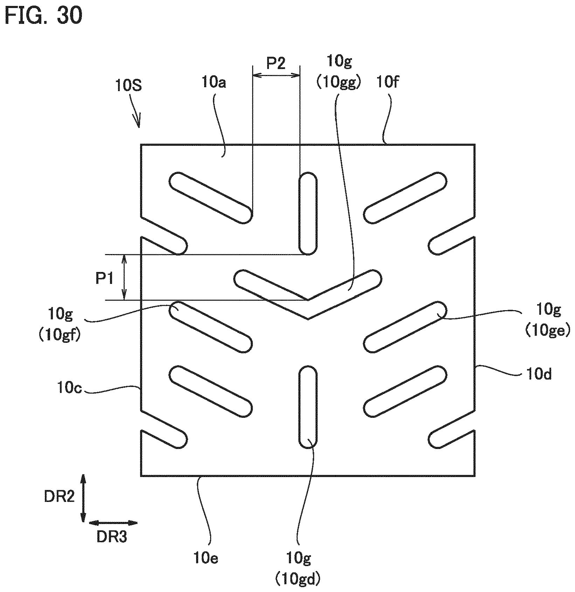

Fig. 30 is a plan view of metal porous body sheet 10S. As illustrated in Fig. 30, in metal porous body sheet 10S, hole 10g has a slit shape in plan view. Multiple holes 10g include holes 10g (holes 10gd) extending linearly along second direction DR2, holes 10g (holes 10ge) extending linearly along a direction that forms an acute angle with the direction from first side 10c to second side 10d, holes 10g (holes 10gf) extending linearly along a direction that forms an obtuse angle with the direction from first side 10c to second side 10d, and V-shaped hole 10g (hole 10gg).

### (Examples)

Hereinafter, results of a water electrolysis test will be described.

As illustrated in Tables 3, 4, 5, and 6, Samples 1 to 47 were prepared as metal porous body sheets used for electrode 30a and electrode 30b. The planar dimensions of Samples 1 to 47 were all 20 mm × 20 mm. The thicknesses of Samples 1 to 47 were all 0.5 mm.

The water electrolysis test was conducted using simple water electrolysis device 110 illustrated in Fig. 9. As support 20, expanded metal made of nickel was used. The thickness of the expanded metal was 0.8 mm. A separator for a nickel-metal hydride battery manufactured by Japan Vilene Company Ltd. was used for diaphragm 40. A polypropylene plate having a thickness of 15 mm was used for plate member 50a and plate member 50b. A platinum wire having a wire diameter of 0.3 mm was used for connection line 80a and connection line 80b. Leaf spring 60a and leaf spring 60b were adjusted so that a stress of 0.03 MPa was applied between electrodes 30a and 30b and diaphragm 40.

### [Table 3]

**Table 3**

| | Average pore diameter | Hole pattern | Cross-sectional taper | Hole shape | First main surface | | Second main surface | | Remarks |
|---|---|---|---|---|---|---|---|---|---|
| | | | | | Width W1 | Width W2 | Width W1 | Width W2 | |
| Sample 1 | 0.45 mm | - | - | - | - | - | - | - | • No holes |
| Sample 2 | 0.85 mm | - | - | - | - | - | - | - | • No holes |
| Sample 3 | 0.45 mm | Square lattice pattern | Not provided | Circle | 1 mm | - | - | - | |
| Sample 4 | 0.85 mm | Square lattice pattern | Not provided | Circle | 1 mm | - | - | - | |
| Sample 5 | 0.45 mm | Square lattice pattern | Not provided | Circle | 1.5 mm | - | - | - | • 5 columns, 5 rows |
| Sample 6 | 0.85 mm | Square lattice pattern | Not provided | Circle | 1.5 mm | - | - | - | • Pitch = P1 4 mm |
| Sample 7 | 0.45 mm | Square lattice pattern | Provided | Circle | 1.5 mm | - | 1 mm | - | • Pitch P2 = 4 mm |
| Sample 8 | 0.85 mm | Square lattice pattern | Provided | Circle | 1.5 mm | - | 1 mm | - | |
| Sample 9 | 0.45 mm | Staggered | Not provided | Circle | 1 mm | - | - | - | |
| Sample 10 | 0.85 mm | Staggered | Not provided | Circle | 1 mm | - | - | - | |
| Sample 11 | 0.45 mm | Staggered | Not provided | Circle | 1.5 mm | - | - | - | |
| Sample 12 | 0.85 mm | Staggered | Not provided | Circle | 1.5 mm | - | - | - | |
| Sample 13 | 0.45 mm | Staggered | Provided | Circle | 1.5 mm | - | 1 mm | - | |
| Sample 14 | 0.85 mm | Staggered | Provided | Circle | 1.5 mm | - | 1 mm | - | • 9 columns, 5 rows |
| Sample 15 | 0.45 mm | Staggered | Provided | Circle | 2 mm | - | 1.5 mm | - | • Pitch P1 = 4 mm |
| Sample 16 | 0.85 mm | Staggered | Provided | Circle | 2 mm | - | 1.5 mm | - | • Pitch P2 = 8 mm |
| Sample 17 | 0.45 mm | Staggered | Not provided | Quadrangle | 1.5 mm | 1.5 mm | - | - | |
| Sample 18 | 0.45 mm | Staggered | Not provided | Ellipse | 1.5 mm | 2 mm | - | - | |
| Sample 19 | 0.45 mm | Staggered | Not provided | Rhombus | 1 mm | 2 mm | - | - | |
| Sample 20 | 0.45 mm | Staggered | Not provided | Rhombus | 2 mm | 4 mm | - | - | |
| Sample 21 | 0.45 mm | Staggered | Not provided | Triangle | 2 mm | 2 mm | - | - | |
| Sample 22 | 0.45 mm | Staggered | Not provided | Triangle | 2 mm | 2 mm | - | - | • Rotate Sample 21 by 180° |
| Sample 23 | 0.45 mm | Staggered | Not provided | Rhombus | 1 mm | 2 mm | - | - | • 19 columns, 9 rows |
| | | | | | | | | | • Pitch P1 = 2 mm |
| | | | | | | | | | • Pitch P2 = 4 mm |
| Sample 24 | 0.45 mm | Staggered | Not provided | Regular | 6 mm | - | - | - | • 9 columns, 13 rows |
| | | | | hexagon | | | | | • Pitch P1 = 4 mm |
| | | | | | | | | | • Pitch P2 = 2 mm |

### [Table 4]

**Table 4**

| | Average pore diameter | Hole pattern | Cross-sectional taper | Hole shape | First main surface | | Second main surface | | Remarks |
|---|---|---|---|---|---|---|---|---|---|
| | | | | | Width W1 | Width W2 | Width W1 | Width W2 | |
| Sample 25 | 0.45 mm | Staggered | Not provided | Circle | 1mm | - | - | - | • Rotate Sample 9 by 90° |
| Sample 26 | 0.85 mm | Staggered | Not provided | Circle | 1mm | - | - | - | • Rotate Sample 10 by 90° |
| Sample 27 | 0.45 mm | Staggered | Not provided | Circle | 1.5 mm | - | - | - | • Rotate Sample 11 by 90° |
| Sample 28 | 0.85 mm | Staggered | Not provided | Circle | 1.5 mm | - | - | - | • Rotate Sample 12 by 90° |
| Sample 29 | 0.45 mm | Staggered | Provided | Circle | 1.5 mm | - | 1 mm | - | • Rotate Sample 13 by 90° |
| Sample 30 | 0.85 mm | Staggered | Provided | Circle | 1.5 mm | - | 1 mm | - | • Rotate Sample 14 by 90° |
| Sample 31 | 0.45 mm | Staggered | Provided | Circle | 2 mm | - | 1.5 mm | - | • Rotate Sample 15 by 90° |
| Sample 32 | 0.85 mm | Staggered | Provided | Circle | 2 mm | - | 1.5 mm | - | • Rotate Sample 16 by 90° |
| Sample 33 | 0.45 mm | Fig. 12 | Not provided | Circle | 1 mm | - | - | - | • Pitch P1 = 4 mm |
| | | | | | | | | | • Pitch P2 = 2 mm |
| Sample 34 | 0.45 mm | Fig. 13 | Not provided | Circle | 1 mm | - | - | - | • Pitch P1 = 2 mm |
| | | | | | | | | | • Pitch P2 = 2 mm |

### [Table 5]

**Table 5**

| | Average pore diameter | Hole pattern | Cross-sectional taper | Hole shape | Width W3 | | Remarks |
|---|---|---|---|---|---|---|---|
| | | | | | First main surface | Second main surface | |
| Sample 35 | 0.45 mm | Fig. 27 | Not provided | Slit | 1 mm | - | • Pitch P2 = 2 mm |
| Sample 36 | 0.45 mm | Fig. 27 | Not provided | Slit | 1.5 mm | - | |
| Sample 37 | 0.45 mm | Fig. 27 | Not provided | Slit | 1 mm | - | • Rotate Sample 35 by 180° |
| Sample 38 | 0.45 mm | Fig. 27 | Not provided | Slit | 1.5 mm | - | • Rotate Sample 36 by 180° |
| Sample 39 | 0.45 mm | Fig. 29 | Not provided | Slit | 1 mm | - | • Pitch P1 = 8 mm |
| Sample 40 | 0.45 mm | Fig. 29 | Provided | Slit | 1.5 mm | 1 mm | • Pitch P2 = 4 mm |
| Sample 41 | 0.45 mm | Fig. 29 | Not provided | Slit | 1 mm | - | • Rotate Sample 39 by 180° |
| Sample 42 | 0.45 mm | Fig. 28 | Not provided | Slit | 1 mm | - | • Pitch P1 = 2 mm |
| | | | | | | | • Pitch P2 = 4 mm |
| | | | | | | | • 9 columns, 5 rows |
| Sample 43 | 0.45 mm | Fig. 30 | Not provided | Slit | 1 mm | - | • Pitch P1 = 4 mm |
| | | | | | | | • Pitch P2 = 4 mm |

### [Table 6]

**Table 6**

| | Average pore diameter | Hole pattern | Cross-sectional taper | Hole shape | Remarks |
|---|---|---|---|---|---|
| Sample 44 | 0.45 mm | Fig. 16 | Not provided | Circle | • Width W1 and width W2 (inner diameter d) are 1 mm |
| Sample 45 | 0.45 mm | Fig. 17 | Not provided | Circle | |
| Sample 46 | 0.45 mm | Fig. 15 | Not provided | Circle | • Inner diameter d in region R1 is 1 mm, inner diameter d in region R2 is 1.5 mm, and inner diameter d in region R3 is 2 mm |
| Sample 47 | 0.45 mm | Fig. 14 | Not provided | Slit (Fig. 29) | • Width W3 in region R1 is 1 mm, and width W3 in region R2 is 2 mm |

In the water electrolysis test, firstly, an electrolytic current was increased from 0 A to 2 A at 5 mA/s (the electrolytic current was increased from 0 A to 2 A over 4000 seconds). Secondly, constant current electrolysis was performed with the electrolytic current of 2 A. Then, the electrolysis voltage was measured at the time point at which 10 minutes have elapsed from the start of constant voltage electrolysis. Tables 7 and 8 show the measurement results of the electrolysis voltage for each Sample.

### [Table 7]

**Table 7**

| | Electrolysis voltage (V) | Reduction (mV) |
|---|---|---|
| Sample 1 | 2.88 | - |
| Sample 2 | 2.9 | - |
| Sample 3 | 2.83 | -50 |
| Sample 4 | 2.88 | -20 |
| Sample 5 | 2.81 | -70 |
| Sample 6 | 2.85 | -50 |
| Sample 7 | 2.8 | -80 |
| Sample 8 | 2.84 | -60 |
| Sample 9 | 2.78 | -100 |
| Sample 10 | 2.84 | -60 |
| Sample 11 | 2.77 | -110 |
| Sample 12 | 2.83 | -70 |
| Sample 13 | 2.76 | -120 |
| Sample 14 | 2.83 | -70 |
| Sample 15 | 2.75 | -130 |
| Sample 16 | 2.82 | -80 |
| Sample 17 | 2.77 | -110 |
| Sample 18 | 2.76 | -120 |
| Sample 19 | 2.76 | -120 |
| Sample 20 | 2.77 | -110 |
| Sample 21 | 2.77 | -110 |
| Sample 22 | 2.76 | -120 |
| Sample 23 | 2.7 | -200 |
| Sample 24 | 2.82 | -80 |
| Sample 25 | 2.74 | -140 |
| Sample 26 | 2.81 | -90 |
| Sample 27 | 2.74 | -140 |
| Sample 28 | 2.8 | -100 |

### [Table 8]

**Table 8**

| | Electrolysis voltage (V) | Reduction (mV) |
|---|---|---|
| Sample 29 | 2.73 | -150 |
| Sample 30 | 2.8 | -100 |
| Sample 31 | 2.71 | -170 |
| Sample 32 | 2.79 | -110 |
| Sample 33 | 2.72 | -180 |
| Sample 34 | 2.71 | -190 |
| Sample 35 | 2.8 | -100 |
| Sample 36 | 2.81 | -90 |
| Sample 37 | 2.82 | -80 |
| Sample 38 | 2.83 | -70 |
| Sample 39 | 2.73 | -170 |
| Sample 40 | 2.72 | -180 |
| Sample 41 | 2.74 | -160 |
| Sample 42 | 2.77 | -130 |
| Sample 43 | 2.76 | -140 |
| Sample 44 | 2.7 | -200 |
| Sample 45 | 2.68 | -220 |
| Sample 46 | 2.75 | -150 |
| Sample 47 | 2.72 | -180 |

As shown in Table 7, the electrolysis voltage was reduced in all Samples (Sample 3 to Sample 47) having holes 10g formed therein. Thus, it has been experimentally revealed that the electrolysis voltage is decreased by forming holes 10g in metal porous body sheet 10.

Sample 5 and Sample 7 were formed under the same conditions except for the cross-sectional shape of hole 10g. Sample 7 had a lower electrolysis voltage than Sample 5. Sample 6 and Sample 8 were formed under the same conditions except for the cross-sectional shape of hole 10g. Sample 8 had a lower electrolysis voltage than Sample 6. Sample 11 and Sample 13 were formed under the same conditions except for the cross-sectional shape of hole 10g. Sample 13 had a lower electrolysis voltage than Sample 11. It has been experimentally reveled from the comparison described above that the electrolysis voltage is decreased by providing a taper shape on hole 10g.

The electrolysis voltages in Sample 44 and Sample 45 were lower than the electrolysis voltage in Sample 9. From this comparison, it has been experimentally revealed that the electrolysis voltage is decreased by setting the number density of holes 10g included in each of the multiple regions formed by dividing first main surface 10a along second direction DR2 to be larger on the other side in second direction DR2 than on one side in second direction DR2.

The electrolysis voltages in Sample 46 and Sample 47 were lower than the electrolysis voltage in Sample 9. From this comparison, it has been experimentally revealed that the electrolysis voltage is decreased by setting inner diameter d of hole 10g included in each of the multiple regions formed by dividing first main surface 10a along second direction DR2 to be larger on the other side in second direction DR2 than on one side in second direction DR2.

### (Configuration of Metal Porous Body Sheet according to Second Embodiment)

A configuration of a metal porous body sheet (hereinafter referred to as "metal porous body sheet 10T") according to the second embodiment will now be described. Here, differences from the configuration of metal porous body sheet 10 will be mainly described, and redundant description will not be repeated.

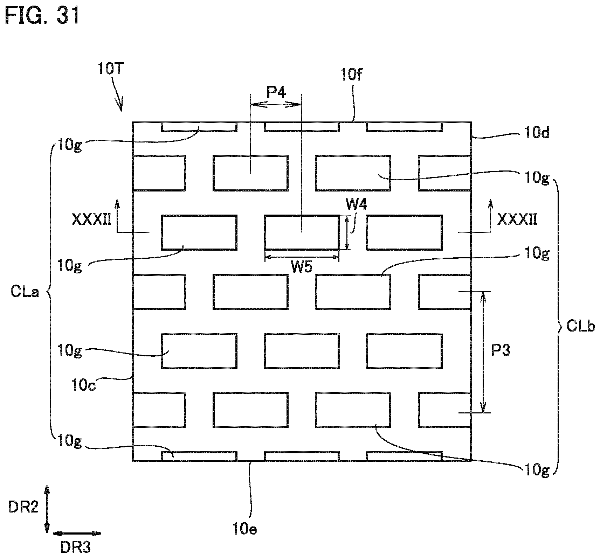

Fig. 31 is a plan view of metal porous body sheet 10T. As illustrated in Fig. 31, metal porous body sheet 10T has first main surface 10a and second main surface 10b. Metal porous body sheet 10T has a rectangular shape including first side 10c, second side 10d, third side 10e, and fourth side 10f in plan view.

Metal porous body sheet 10T is constituted by, for example, a metal porous body having a three-dimensional mesh structure. It is to be noted, however, that the metal porous body constituting metal porous body sheet 10T may not have a three-dimensional mesh structure. Metal porous body sheet 10T may be, for example, a woven fabric or a nonwoven fabric made of metal fibers.

The metal porous body constituting metal porous body sheet 10T may be formed of an alloy containing an element dissolved in an alkali and metal having alkali resistance or a composite in which an element dissolved in an alkali is dispersed in metal having alkali resistance. Examples of the element dissolved in an alkali include zinc (Zn), aluminum (Al), and tin (Sn). Examples of the metal having alkali resistance include nickel. In this case, fine irregularities are generated on the surface of the metal porous body due to elution of element by the treatment in an alkali. As a result, the surface area of the metal porous body is increased, and the characteristics of generating hydrogen and oxygen are improved. However, the metal porous body constituting metal porous body sheet 10T may be formed of a metal material other than the above materials.

A catalyst may be supported on the surface of the metal porous body constituting metal porous body sheet 10T. The catalyst is, for example, a noble metal oxide such as ruthenium dioxide (RuO₂) or a cobalt oxide. In this case, the characteristics of generating hydrogen and oxygen on the surface of the metal porous body are improved.

The average pore diameter of pores in metal porous body sheet 10T in plan view is greater than or equal to 100 µm. The average pore diameter of pores in metal porous body sheet 10T in plan view is preferably greater than or equal to 400 µm. The average pore diameter of the pores in metal porous body sheet 10T in plan view is measured by the following method. Firstly, the surface of metal porous body sheet 10T is observed with a microscope or the like. The surface is observed on at least ten fields. Secondly, an average value (nc) of the number of unit cells per 1 inch (25.4 mm = 25400 µm) is obtained on the basis of the above observation results. Thirdly, the obtained nc is substituted into the following formula, by which the average pore diameter of pores in metal porous body sheet 10T in plan view is obtained.

### <Calculation formula of average pore diameter of pores in metal porous body sheet 10T in plan view>

(Average pore diameter of pores in metal porous body sheet 10T in plan view (unit: µm)) = 25400 µm/nc

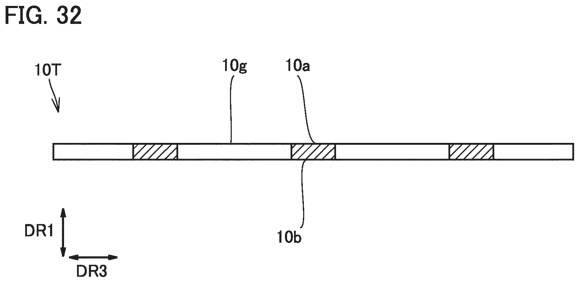

Fig. 32 is a cross-sectional view taken along line XXXII-XXXII in Fig. 31. As illustrated in Fig. 32, metal porous body sheet 10T is formed with multiple holes 10g. Holes 10g preferably penetrate metal porous body sheet 10T along first direction DR1. Each of holes 10g is, for example, rectangular in plan view. Each of holes 10g may be circular in plan view.

An opening ratio of metal porous body sheet 10T is greater than or equal to 0.05 and less than or equal to 0.35. The opening ratio of metal porous body sheet 10T is calculated by dividing the total opening area of holes 10g in first main surface 10a by the area of first main surface 10a.

The porosity of metal porous body sheet 10T is greater than or equal to 80%. The porosity of metal porous body sheet 10T is preferably greater than or equal to 85%. The porosity (unit: percent) of metal porous body sheet 10 is calculated by 1 - (1 - porosity of metal porous body sheet 10T) × (1 - opening ratio of metal porous body sheet 10T). The porosity of metal porous body sheet 10T is calculated by [1 - {M/(V × d)}] × 100 (unit: percent) where the mass of metal porous body sheet 10T is M (unit: g), the external volume of metal porous body sheet 10T is V (unit: cm³), and the density of the metal constituting metal porous body sheet 10T is d (unit: g/cm³).

Multiple holes 10g are arranged so as to form multiple columns CL along second direction DR2, for example. Each of multiple columns CL is periodically arranged along third direction DR3. From another point of view, multiple columns CL are equally spaced along third direction DR3. Multiple columns CL include multiple columns CLa and multiple columns CLb. Columns CLa and columns CLb are alternately arranged in third direction DR3.

Holes 10g belonging to each of multiple columns CL are periodically arranged along second direction DR2. A distance between two adjacent holes 10g in second direction DR2 is defined as a pitch P3. Pitch P3 is a center-to-center distance in second direction DR2 between two adjacent holes 10g.

A distance between two adjacent columns CL in third direction DR3 is defined as a pitch P4. Pitch P4 is a center-to-center distance in third direction DR3 of holes 10g belonging to column CLa and column CLb adjacent to each other.

Column CLa is at a position shifted from column CLb by 0.5 times pitch P3 in second direction DR2. From another point of view, multiple holes 10g are arranged in a staggered pattern.

The width of hole 10g in second direction DR2 is defined as a width W4, and the width of hole 10g in third direction DR3 is defined as a width W5. Width W5 is preferably larger than width W4. Width W4 is preferably greater than or equal to 0.5 mm. Width W5 is preferably greater than or equal to 1.5 mm. Width W5 is more preferably greater than or equal to twice width W4.

A value obtained by dividing a value obtained by dividing width W5 from pitch P4 by pitch P4 is preferably less than or equal to 0.5. From another point of view, it is preferable that the sum of the widths in third direction DR3 of the regions between column CLa and column CLb where holes 10g are not formed is less than or equal to 50% of the width of metal porous body sheet 10T in third direction DR3.

The value obtained by dividing a value obtained by dividing width W5 from pitch P4 by pitch P4 is more preferably less than 0 (width W5 is larger than pitch P4). From another point of view, the position of hole 10g belonging to one column CLa in third direction DR3 preferably partially overlaps the position of hole 10g belonging to column CLb adjacent to one column CLa in third direction DR3.

### (Configuration of water electrolysis device according to second embodiment)

A configuration of a water electrolysis device (hereinafter referred to as "water electrolysis device 100A") according to the second embodiment will now be described. Here, differences from the configuration of water electrolysis device 100 will be mainly described, and redundant description will not be repeated.

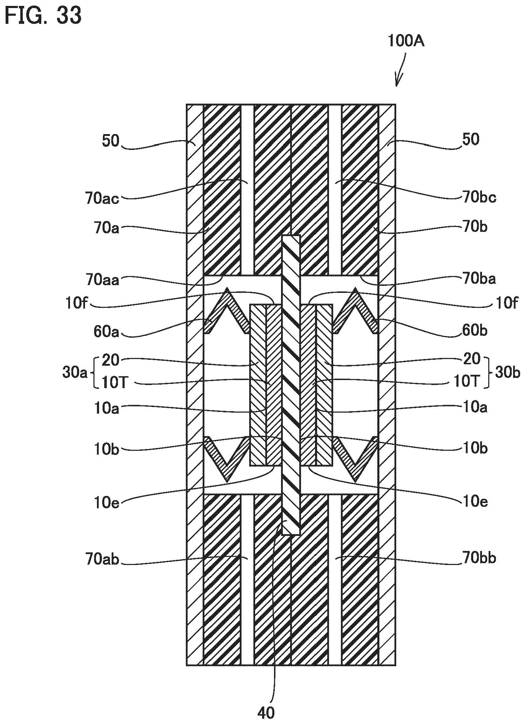

Fig. 33 is a schematic cross-sectional diagram of a unit cell of water electrolysis device 100A. As illustrated in Fig. 33, a unit cell of water electrolysis device 100A includes electrodes 30a and 30b, diaphragm 40, bipolar plates 50, leaf springs 60a and 60b, and frames 70a and 70b. Note that the upper and lower sides in Fig. 33 correspond to the vertically upper side and the vertically lower side, respectively.

It is to be noted, however, that, unlike water electrolysis device 100, water electrolysis device 100A uses metal porous body sheet 10T for electrode 30a and electrode 30b instead of metal porous body sheet 10. In metal porous body sheet 10T, first side 10c and second side 10d are along the vertical direction (top-bottom direction in the figure), and third side 10e and fourth side 10f are along the horizontal direction.

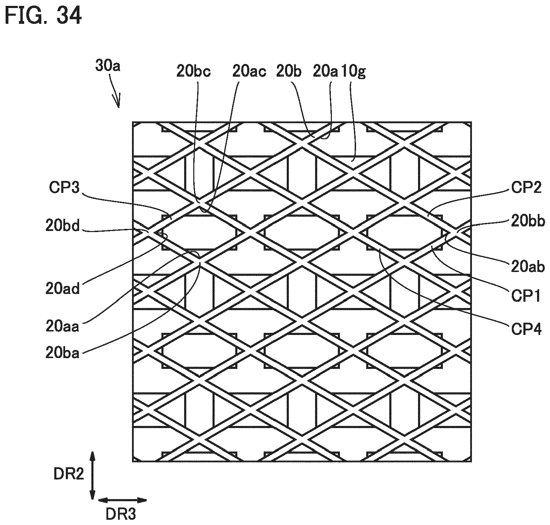

Support body 20 is disposed on first main surface 10a. Fig. 34 is a plan view of electrode 30a. As illustrated in Fig. 34, support 20 is expanded metal. Support 20 is formed with multiple rhombic holes 20a. Rhombic holes 20a penetrate support 20 along the thickness direction. Each of rhombic holes 20a has a rhombic shape in plan view. In this rhombic shape, two diagonals extend along second direction DR2 and third direction DR3, respectively.

Multiple rhombic holes 20a are arranged in a staggered pattern. A portion of support 20 where rhombic holes 20a are not formed (a portion around rhombic holes 20a) is a strand 20b. Each of rhombic holes 20a has a vertex 20aa, a vertex 20ab, a vertex 20ac, and a vertex 20ad. Vertex 20aa is adjacent to vertex 20ab and vertex 20ad. Vertex 20ac is adjacent to vertex 20ab and vertex 20ad. Vertex 20aa and vertex 20ac face each other in second direction DR2. Vertex 20ab and vertex 20ad face each other in third direction DR3.

Strand 20b has an intersection 20ba, an intersection 20bb, an intersection 20bc, and an intersection 20bd. Intersection 20ba, intersection 20bb, intersection 20bc, and intersection 20bd are adjacent to vertex 20aa, vertex 20ab, vertex 20ac, and vertex 20ad, respectively.

An intermediate position between intersection 20ba and intersection 20bb is defined as an intermediate position CP1, an intermediate position between intersection 20bb and intersection 20bc is defined as an intermediate position CP2, an intermediate position between intersection 20bc and intersection 20bd is defined as an intermediate position CP3, and an intermediate position between intersection 20bd and intersection 20ba is defined as an intermediate position CP4. Support 20 is disposed on first main surface 10a so as to overlap holes 10g at intermediate position CP1, intermediate position CP2, intermediate position CP3, and intermediate position CP4.

Although not illustrated, support 20 used for electrode 30b also has the same structure as support 20 used for electrode 30a. Although not illustrated, also in electrode 30b, the positional relationship between metal porous body sheet 10T and support 20 is similar to that of electrode 30a.

### (Effect of water electrolysis device according to second embodiment)

Hereinafter, effects of water electrolysis device 100A will be described.

When the porosity of metal porous body sheet 10T is greater than or equal to 80% and the opening ratio of holes 10g is greater than or equal to 0.05 and less than or equal to 0.35, bubbles B are less likely to stay inside metal porous body sheet 10T, so that the electrolysis voltage of water electrolysis device 100A can be reduced.

A region where hole 10g is not formed may remain between hole 10g belonging to column CLa and hole 10g belonging to column CLb. When width W5 is larger than width W4 (more specifically, when width W4 is greater than or equal to 0.5 mm, and width W5 is greater than or equal to 1.5 mm, and when width W5 is greater than or equal to twice width W4), this region is narrowed, so that bubbles B are further less likely to stay inside metal porous body sheet 10T. As a result, the electrolysis voltage of water electrolysis device 100A can be further reduced.

In particular, when the value obtained by dividing the value obtained by dividing width W5 from pitch P4 by pitch P4 is less than or equal to 0.5, the total width of the region is less than or equal to 50% of the width of metal porous body sheet 10T, and when the value obtained by dividing the value obtained by dividing width W5 from pitch P4 by pitch P4 is less than 0, the region is not present. Therefore, in these cases, the electrolysis voltage of water electrolysis device 100A can be further reduced.

As a result of intensive studies by the present inventors, bubbles B are likely to remain in the portion of metal porous body sheet 10T overlapping intermediate positions CP1 to CP4. Therefore, when hole 10g is formed in the portion of metal porous body sheet 10T overlapping intermediate position CP1 to intermediate position CP4, bubbles B easily escape from metal porous body sheet 10T, so that the electrolysis voltage of water electrolysis device 100A can be further reduced.

### (Water electrolysis test)

A water electrolysis test using water electrolysis device 100A will be described below.

In the water electrolysis test, the dimensions of electrode 30a and electrode 30b were 55 mm × 45 mm, and the thickness of support 20 was 0.8 mm. In the water electrolysis test, the distance between intersection 20ba and intersection 20bc was set to 4 mm, and the distance between intersection 20bb and intersection 20bd was set to 8 mm. In the water electrolysis test, the width of strand 20b was set to 1 mm.

The electrolytic solution used in the water electrolysis test was a 7 mol/L aqueous potassium hydroxide solution. In the water electrolysis test, a hydrophilized polyethylene nonwoven fabric was used for diaphragm 40. In the water electrolysis test, a supply amount of the electrolytic solution was 50 cc/min.

The water electrolysis test was conducted at 60°C. The water electrolysis test was carried out after ten preliminary electrolysis runs. The preliminary electrolysis was performed by passing a steady current of 12.5 A for 5 minutes while switching the positive and negative of electrode 30a and electrode 30b. The water electrolysis test was carried out by passing a steady current of 12.5 A for 1 hour, and the electrolysis voltage after 1 hour had elapsed was evaluated.

Samples 1 to 37 were prepared as samples to be subjected to the water electrolysis test. In Samples 1 to 37, the average pore diameter of metal porous body sheet 10T when viewed in the direction orthogonal to first main surface 10a, the porosity of metal porous body sheet 10T, the arrangement of holes 10g, the planar shape of holes 10g, the opening ratio of holes 10g, width W4, width W5, pitch P4, and whether holes 10g overlap intermediate positions CP1 to CP4 were changed as shown in Table 9. Samples 1 to 35 are made of a metal porous body having a three-dimensional mesh structure. Sample 36 and Sample 37 are formed of a nonwoven fabric and a woven fabric (knit) of metal fibers, respectively.

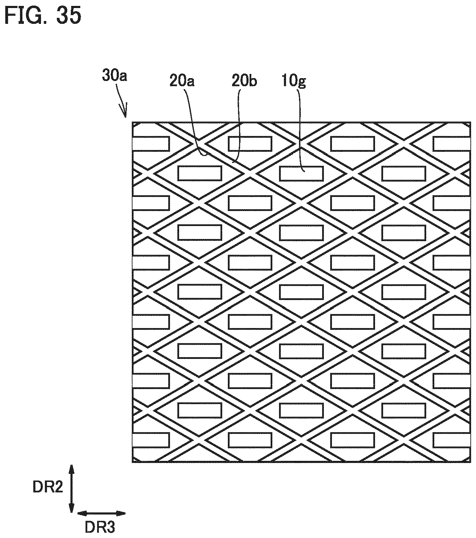

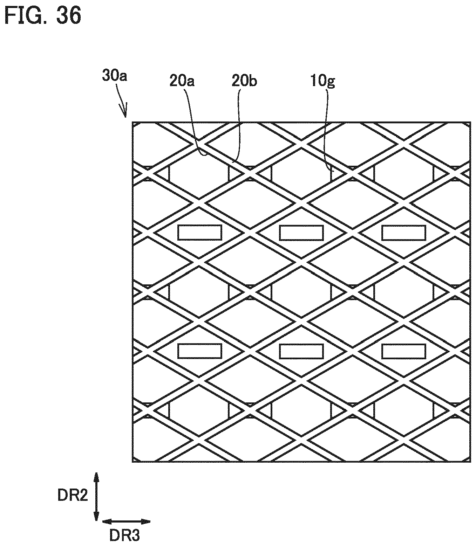

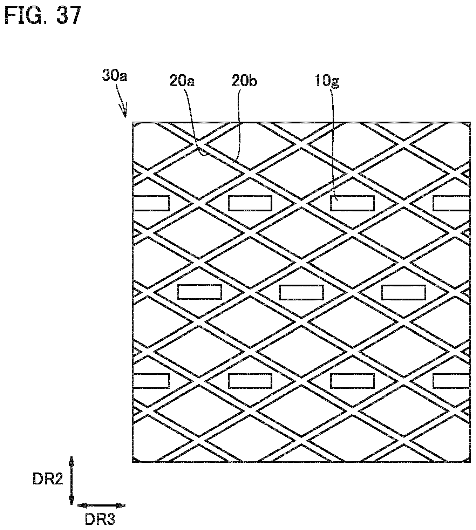

Fig. 35 is a plan view illustrating a first arrangement of holes 10g in the water electrolysis test. As illustrated in Fig. 35, in the first arrangement, pitch P3 was equal to the center-to-center distance between two rhombic holes 20a adjacent to each other in second direction DR2. Fig. 36 is a plan view illustrating a second arrangement of holes 10g in the water electrolysis test. As illustrated in Fig. 36, in the second arrangement, pitch P3 was twice the center-to-center distance between two rhombic holes 20a adjacent to each other in second direction DR2. Fig. 37 is a plan view illustrating a third arrangement of holes 10g in the water electrolysis test. As illustrated in Fig. 37, in the third arrangement, pitch P3 was three times the center-to-center distance between two rhombic holes 20a adjacent to each other in second direction DR2.

### [Table 9]

**Table 9**

| | Average pore diameter (mm) | Thickness (mm) | Porosity | Arrangement of holes | Hole shape | Opening ratio | W4(mm) | W5(mm) | P4(mm) | (P4- W5)/P4 | Whether center position of strand overlaps hole |
|---|---|---|---|---|---|---|---|---|---|---|---|
| Sample 1 | 0.45 | 0.5 | 90% | - | - | - | - | - | - | - | - |
| Sample 2 | 0.45 | 1 | 95% | - | - | - | - | - | - | - | - |
| Sample 3 | 0.45 | 0.2 | 76% | - | - | - | - | - | - | - | - |
| Sample 4 | 0.45 | 0.2 | 72% | - | - | - | - | - | - | - | |
| Sample 5 | 0.3 | 0.5 | 76% | - | - | - | - | - | - | - | - |
| Sample 6 | 0.1 | 0.5 | 62% | - | - | - | - | - | - | - | - |
| Sample 7 | 0.45 | 0.5 | 91% | First arrangement | Circle | 0.05 | 1 | 1 | 4 | 0.75 | Not overlap |
| Sample 8 | 0.45 | 0.5 | 91% | First arrangement | Circle | 0.11 | 1.5 | 1.5 | 4 | 0.625 | Not overlap |
| Sample 9 | 0.45 | 0.5 | 92% | First arrangement | Circle | 0.20 | 2 | 2 | 4 | 0.5 | Not overlap |
| Sample 10 | 0.45 | 0.5 | 95% | First arrangement | Circle | 0.45 | 3 | 3 | 4 | 0.25 | Not overlap |
| Sample 11 | 0.45 | 1 | 96% | First arrangement | Circle | 0.20 | 2 | 2 | 4 | 0.5 | Not overlap |
| Sample 12 | 0.45 | 0.2 | 81% | First arrangement | Circle | 0.20 | 2 | 2 | 4 | 0.5 | Not overlap |
| Sample 13 | 0.45 | 0.2 | 78% | First arrangement | Circle | 0.20 | 2 | 2 | 4 | 0.5 | Not overlap |
| Sample 14 | 0.3 | 0.5 | 81% | First arrangement | Circle | 0.20 | 2 | 2 | 4 | 0.5 | Not overlap |
| Sample 15 | 0.1 | 0.5 | 70% | First arrangement | Circle | 0.20 | 2 | 2 | 4 | 0.5 | Not overlap |
| Sample 16 | 0.45 | 0.5 | 93% | Second arrangement | Circle | 0.25 | 3.2 | 3.2 | 4 | 0.2 | Not overlap |
| Sample 17 | 0.45 | 0.5 | 93% | Third arrangement | Circle | 0.26 | 4 | 4 | 4 | 0 | Overlap |
| Sample 18 | 0.45 | 0.5 | 93% | First arrangement | Rectangle | 0.31 | 1 | 5 | 4 | -0.25 | Overlap |
| Sample 19 | 0.45 | 0.2 | 83% | First arrangement | Rectangle | 0.31 | 1 | 5 | 4 | -0.25 | Overlap |
| Sample 20 | 0.3 | 0.5 | 83% | First arrangement | Rectangle | 0.31 | 1 | 5 | 4 | -0.25 | Overlap |
| Sample 21 | 0.1 | 0.5 | 74% | First arrangement | Rectangle | 0.31 | 1 | 5 | 4 | -0.25 | Overlap |
| Sample 22 | 0.1 | 0.7 | 81% | First arrangement | Rectangle | 0.31 | 1 | 5 | 4 | -0.25 | Overlap |
| Sample 23 | 0.45 | 0.5 | 95% | First arrangement | Rectangle | 0.47 | 1.5 | 5 | 4 | -0.25 | Overlap |
| Sample 24 | 0.45 | 0.5 | 92% | First arrangement | Rectangle | 0.15 | 1 | 2.4 | 4 | 0.4 | Not overlap |
| Sample 25 | 0.45 | 0.5 | 92% | First arrangement | Rectangle | 0.23 | 1.5 | 2.4 | 4 | 0.4 | Not overlap |
| Sample 26 | 0.45 | 0.5 | 92% | First arrangement | Rectangle | 0.18 | 1.5 | 1.9 | 4 | 0.525 | Not overlap |
| Sample 27 | 0.45 | 0.5 | 92% | First arrangement | Rectangle | 0.19 | 0.6 | 5 | 4 | -0.25 | Overlap |
| Sample 28 | 0.45 | 0.5 | 91% | First arrangement | Rectangle | 0.13 | 0.4 | 5 | 4 | -0.25 | Overlap |
| Sample 29 | 0.45 | 0.5 | 92% | Second arrangement | Rectangle | 0.16 | 1 | 5 | 4 | -0.25 | Overlap |
| Sample 30 | 0.45 | 0.5 | 93% | Second arrangement | Rectangle | 0.31 | 2 | 5 | 4 | -0.25 | Overlap |
| Sample 31 | 0.45 | 0.5 | 95% | Second arrangement | Rectangle | 0.47 | 3 | 5 | 4 | -0.25 | Overlap |
| Sample 32 | 0.45 | 0.5 | 92% | Second arrangement | Rectangle | 0.22 | 2 | 3.5 | 4 | 0.125 | Not overlap |
| Sample 33 | 0.45 | 0.5 | 91% | Second arrangement | Rectangle | 0.11 | 0.7 | 5 | 4 | -0.25 | Overlap |
| Sample 34 | 0.45 | 0.5 | 91% | Third arrangement | Rectangle | 0.10 | 1 | 5 | 4 | -0.25 | Overlap |
| Sample 35 | 0.45 | 0.5 | 92% | Third arrangement | Rectangle | 0.21 | 2 | 5 | 4 | -0.25 | Overlap |
| Sample 36 | - | 0.2 | 88% | First arrangement | Rectangle | 0.31 | 1 | 5 | 4 | -0.25 | Overlap |
| Sample 37 | - | 0.9 | 93% | First arrangement | Rectangle | 0.31 | 1 | 5 | 4 | -0.25 | Overlap |

Table 10 shows the results of the water electrolysis test. As shown in Table 10, Samples 7 to 9, Sample 11, Sample 12, Sample 14, Samples 16 to 20, Sample 22, Samples 24 to 30, and Samples 32 to 37 exhibited lower electrolysis voltages than Sample 1.

On the other hand, Samples 1 to 6, Sample 10, Sample 13, Sample 15, Sample 21, Sample 23, and Sample 31 exhibited an electrolysis voltage greater than or equal to that of Sample 1.

### [Table 10]

**Table 10**

| | Electrolysis voltage (V) | Difference (V) from electrolysis voltage of Sample 1 |
|---|---|---|
| Sample 1 | 2.31 | - |
| Sample 2 | 2.36 | 0.05 |
| Sample 3 | 2.34 | 0.03 |
| Sample 4 | 2.38 | 0.07 |
| Sample 5 | 2.32 | 0.01 |
| Sample 6 | 2.4 | 0.09 |
| Sample 7 | 2.28 | -0.03 |
| Sample 8 | 2.25 | -0.06 |
| Sample 9 | 2.24 | -0.07 |
| Sample 10 | 2.33 | 0.02 |
| Sample 11 | 2.29 | -0.02 |
| Sample 12 | 2.3 | -0.01 |
| Sample 13 | 2.35 | 0.04 |
| Sample 14 | 2.24 | -0.07 |
| Sample 15 | 2.33 | 0.02 |
| Sample 16 | 2.24 | -0.07 |
| Sample 17 | 2.24 | -0.07 |
| Sample 18 | 2.21 | -0.10 |
| Sample 19 | 2.2 | -0.11 |
| Sample 20 | 2.19 | -0.12 |
| Sample 21 | 2.31 | 0.00 |
| Sample 22 | 2.25 | -0.06 |
| Sample 23 | 2.31 | 0.00 |
| Sample 24 | 2.22 | -0.09 |
| Sample 25 | 2.23 | -0.08 |
| Sample 26 | 2.24 | -0.07 |
| Sample 27 | 2.18 | -0.13 |
| Sample 28 | 2.27 | -0.04 |
| Sample 29 | 2.19 | -0.13 |
| Sample 30 | 2.17 | -0.14 |
| Sample 31 | 2.32 | 0.01 |
| Sample 32 | 2.22 | -0.09 |
| Sample 33 | 2.21 | -0.10 |
| Sample 34 | 2.2 | -0.11 |
| Sample 35 | 2.19 | -0.12 |
| Sample 36 | 2.27 | -0.04 |
| Sample 37 | 2.24 | -0.07 |

As shown in Table 9, in Samples 7 to 9, Sample 11, Sample 12, Sample 14, Samples 16 to 20, Sample 22, Samples 24 to 30, and Samples 32 to 37, the porosity of metal porous body sheet 10T was greater than or equal to 80%, and the opening ratio of holes 10g was greater than or equal to 0.05 and less than or equal to 0.35.

On the other hand, in Samples 1 to 6, no hole 10g was formed. In addition, Sample 10, Sample 13, Sample 15, Sample 21, Sample 23, and Sample 31 did not satisfy any of the conditions that the porosity of metal porous body sheet 10T was greater than or equal to 80% and that the opening ratio of holes 10g was greater than or equal to 0.05 and less than or equal to 0.35.

From this comparison, it has been experimentally revealed that the electrolysis voltage of water electrolysis device 100A is lowered by setting the porosity of metal porous body sheet 10T to be greater than or equal to 80% and setting the opening ratio of holes 10g to be greater than or equal to 0.05 and less than or equal to 0.35.

It should be understood that the embodiments disclosed herein are illustrative in all respects and not restrictive. The scope of the present invention is defined not by the above description of the embodiments but by the claims, and is intended to include meanings equivalent to the claims and all modifications within the scope.

### REFERENCE SIGNS LIST

10a: First main surface, 10b: Second main surface, 10c: first side, 10d: second side, 10e: third side, 10f: fourth side, 10g, 10ga, 10gb, 10gc, 10gd, 10ge, 10gf, 10gg: hole, 10h: bottom portion, 10i: first portion, 10j: second portion, 11: skeleton, 11a: skeleton body, 11b: internal space, 20: support, 20a: rhombic hole, 20b: strand, 20aa, 20ab, 20ac, 20ac: vertex, 20ba, 20bb, 20bc, 20bd: intersection, 30a, 30b: electrode, 40: diaphragm, 50: bipolar plate, 50a: plate member, 50b: plate member, 60a, 60b: leaf spring, 70a: frame, 70aa: opening, 70ab, 70ac: hole, 70b: frame, 70ba: opening, 70bb, 70bc: hole, 80a, 80b: connection line, 90: container, 91: electrolytic solution 100, 100A: water electrolysis device, 110: simple water electrolysis device, 10, 10A, 10B, 10C, 10D, 10E, 10F, 10G, 10H, 101, 10J, 10K, 10L, 10M, 10N, 10O, 10P, 10Q, 10R, 10S, 10T: metal porous body sheet B: bubble, CL1: first column, CL2: second column, CL3: third column, CL4: fourth column, CL5: fifth column, CL, CLa, CLb: column, CP1, CP2, CP3, CP4: intermediate position, DR1: first direction, DR2: second direction, DR3: third direction, L1, L2: length, P1, P2, P3, P4: pitch, R1: first region, R2: second region, R3: third region, RO1: first row, RO2: second row, RO3: third row, RO4: fourth row, RO5: fifth row, RO6: sixth row, RO7: seventh row, RO8: eighth row, RO9: ninth row, S1: area, S2: area, W1, W2, W3, W4, W5: width, d: inner diameter, DE: depth

## Claims

1. A metal porous body sheet including a metal porous body having a three-dimensional mesh structure, the metal porous body sheet comprising a first main surface and a second main surface that is a reverse surface to the first main surface, wherein
the first main surface is formed with multiple holes extending along a first direction from the first main surface toward the second main surface.

2. The metal porous body sheet according to claim 1, wherein each of the multiple holes penetrates the metal porous body sheet along the first direction.

3. The metal porous body sheet according to claim 1 or 2, wherein each of the multiple holes has an inner diameter that decreases from a first main surface side toward a second main surface side.

4. The metal porous body sheet according to any one of claims 1 to 3, wherein
the first main surface is divided into multiple regions along a second direction orthogonal to the first direction, and
inner diameters of the multiple holes located in a first region that is one of the multiple regions are smaller than inner diameters of the multiple holes located in a second region that is another one of the multiple regions.

5. The metal porous body sheet according to any one of claims 1 to 3, wherein
the first main surface is divided into multiple regions along a second direction orthogonal to the first direction, and
a value obtained by dividing a number of the multiple holes located in a first region that is one of the multiple regions by an area of the first region is smaller than a value obtained by dividing a number of the multiple holes located in a second region that is another one of the multiple regions by an area of the second region.

6. A water electrolysis device comprising an electrolysis electrode having the metal porous body sheet according to any one of claims 1 to 5.

7. A metal porous body sheet comprising a first main surface and a second main surface that is a reverse surface to the first main surface, wherein
the first main surface is formed with multiple holes penetrating the metal porous body sheet along a first direction from the first main surface toward the second main surface,
the metal porous body sheet has a porosity of greater than or equal to 80%, and
a value obtained by dividing a total opening area of the multiple holes in the first main surface by an area of the first main surface is greater than or equal to 0.05 and less than or equal to 0.35.

8. The metal porous body sheet according to claim 7, wherein
the metal porous body sheet includes a metal porous body having a three-dimensional mesh structure, and
an average pore diameter of pores in the metal porous body sheet when viewed in a direction orthogonal to the first main surface is greater than or equal to 100 µm.

9. The metal porous body sheet according to claim 7 or 8, wherein
the multiple holes are arranged along a second direction orthogonal to the first direction so as to form multiple columns,
the multiple holes included in each of the multiple columns are periodically arranged at a first interval in the second direction, and
each of the multiple columns is periodically arranged at a second interval in a third direction orthogonal to the first direction and the second direction.

10. The metal porous body sheet according to claim 9, wherein
each of the multiple holes has a first width in the second direction and a second width in the third direction,
the first width is greater than or equal to 0.5 mm, and
the second width is greater than the first width and is greater than or equal to 1.5 mm.

11. The metal porous body sheet according to claim 10, wherein the second width is greater than or equal to twice the first width.

12. The metal porous body sheet according to claim 11, wherein
the multiple columns include multiple first columns and multiple second columns,
the multiple first columns and the multiple second columns are alternately arranged in the third direction, and
the multiple first columns are located at positions shifted from the multiple second columns by 0.5 times the first interval in the second direction.

13. The metal porous body sheet according to claim 12, wherein a value obtained by dividing, by the second interval, a value obtained by subtracting the second width from the second interval is greater than or equal to 0.5.

14. An electrode comprising:
the metal porous body sheet according to claim 13; and
a support that has a plate shape and that is disposed on the first main surface, wherein
the support includes multiple rhombic holes penetrating the support along the first direction and a strand that is located around each of the multiple rhombic holes,
the multiple rhombic holes are arranged in a staggered pattern in such a manner that two diagonals extend along the second direction and the third direction,
respectively,
each of the multiple rhombic holes includes a first vertex and a second vertex adjacent to the first vertex,
the strand includes a first intersection adjacent to the first vertex and a second intersection adjacent to the second vertex,
the metal porous body sheet is disposed such that the second direction coincides with a vertical direction, and
the support is disposed such that a portion of the strand at an intermediate position between the first intersection and the second intersection overlaps the multiple holes.
